# EUROPEAN PATENT SPECIFICATION

(11) **EP 3 889 243 B1**
(45) Date of publication and mention of the grant of the patent: **22.04.2026**
(21) Application number: 19889923.9
(22) Date of filing: 15.02.2019
(51) Int. Cl.: C12C 13/10, B67D 1/08, B67D 1/04, A47J 31/00, F25D 31/00, C12C 11/00, B67D 1/07

(54) **BEVERAGE MAKER AND CONTROL METHOD THEREFOR**
GETRÄNKEZUBEREITER UND STEUERVERFAHREN DAFÜR
DISPOSITIF DE FABRICATION DE BOISSON ET PROCÉDÉ DE COMMANDE CORRESPONDANT

(30) Priority: 27.11.2018 KR 20180148408
(43) Date of publication of application: 06.10.2021
(73) Proprietor: LG Electronics Inc., Yeongdeungpo-gu Seoul 07336 (KR)
(72) Inventor: LEE, Daewoong, Seoul 08592 (KR); KIM, Yongbum, Seoul 08592 (KR); HONG, Jinpyo, Seoul 08592 (KR)
(74) Representative: Ter Meer Steinmeister & Partner
(86) International application number: PCT/KR2019/001874
(87) International publication number: WO 2020/111388

(56) References cited:
- EP-A1- 3 246 392
- KR-A- 20170 130 257
- KR-A- 20180 025 100
- KR-B1- 101 816 476
- KR-Y1- 0 135 223
- KR-Y1- 200 301 300
- US-A1- 2018 072 972

## Description

### [Technical Field]

The present disclosure relates to a beverage maker, and more particularly, to a beverage maker which prevents backflow of bubbles generated when air is supplied to a beverage which is being made, and a control method thereof.

### [Background Art]

Beverages are collectively referred to as drinkable liquids such as alcohol or tea. For example, beverages may be divided into various categories such as water (a beverage) to solve thirst, juice beverages with unique flavor and taste, refreshing beverages giving refreshing sensation, favorite beverages with an arousal effect, or alcoholic beverages with an alcohol effect.

Representative examples of such a beverage is beer. The beer is an alcoholic beverage produced by making juice of malt, which is made by sprouting barley, filtering the juice, adding hop, and fermenting yeast.

Consumers may purchase ready-made products made and sold by a beer maker or take home beer (or handmade beer) produced by directly fermenting beer ingredients at home or in a bar.

House beer may be made in a variety of types rather than ready-made products and may be made to better suit the consumer's taste.

The ingredients for making beer may include water, liquid malt, hop, yeast, flavoring additive, and the like.

Leaven, which is called yeast, may be added to liquid malt to ferment the liquid malt and assist production of alcohol and carbonic acid.

The flavor additives are additives that enhance the taste of beer, such as fruit, syrup, vanilla beans, and the like.

Generally, the house beer may include three stages, namely, a wort production step, a fermentation step, and an aging step, and it may take about two to three weeks from the wort production step to the aging step.

It is important for the house beer to maintain an optimum temperature during the fermentation stage, and the more the beer is more simply made, the more user's convenience is improved.

In recent years, a beverage maker capable of easily making a beer-like beverage in a home or a bar has been gradually used, and it is preferable that such a beverage maker is configured to be convenient. EP 3 246 392 A1 relates to a beer maker, and more particularly, to a beer maker capable of attaching/detaching a capsule containing an additive for brewing beer. US 2018/0072972 A1 relates to a fermentation device comprising: a fermentation vessel having an open and a closed fermentation configuration; an specific gravity measurement system comprising a weight sensor and a pressure sensor, the specific gravity measurement system configured to sense the level of fermentation in the open or the closed fermentation configuration; and a fermentation controller configured to: access a desired brix profile; receive the sensed level of fermentation in the open or the closed fermentation configuration from the specific gravity measurement system, and adjust a
fermentation parameter during a primary and/or a secondary fermentation of a mixture contained in the fermentation vessel in real time.

### [Disclosure]

The invention relates to a beverage maker comprising:
a fermentation tank having a space formed therein to make a beverage;
a temperature controller configured to control a temperature of the fermentation tank;
an air pump configured to supply air to the fermentation tank;a gas discharge channel connected with the fermentation tank and configured to discharge a part of the air supplied to the fermentation tank;
a temperature sensor configured to sense the temperature of the fermentation tank;
a controller configured to control the temperature controller to cool the fermentation tank accommodating a mixture including ingredients of the beverage while making the beverage, to sense the temperature of the fermentation tank by using the temperature sensor, and to control the air pump to supply air to the fermentation tank,an ingredient supplier configured to accommodate an additive to be introduced into the fermentation tank while making the beverage, and a water supply pump configured to supply water,wherein the controller is additionally configured to control:
   - the additive to be introduced into the fermentation tank before the air is supplied to the fermentation tank,
   - the water supply pump to supply water to the ingredient supplier to introduce the additive accommodated in the ingredient supplier into the fermentation tank,
   - the water supply pump to introduce the additive into the fermentation tank when the sensed temperature is less than or equal to a first reference temperature,
   - to terminate cooling of the fermentation tank when the sensed temperature is less than or equal to a second reference temperature which is lower than the first reference temperature, and
   - to supply air to the fermentation tank after terminating cooling of the fermentation tank.

The invention also relates to a control method of a beverage maker, the method comprising:
controlling, by a controller of the beverage maker, a temperature controller of the beverage maker to cool a fermentation tank accommodating a mixture including ingredients of a beverage;
sensing a temperature of the fermentation tank by using a temperature sensor;
introducing an additive accommodated in an ingredient supplier of the beverage maker into the fermentation tank;
when the sensed temperature is less than or equal to a reference temperature, terminating cooling of the fermentation tank; and supplying air to the fermentation tank by driving an air pump of the beverage maker,wherein introducing the additive into the fermentation tank is performed before supplying the air to the fermentation tank,wherein introducing the additive into the fermentation tank comprises controlling a water supply pump included in the beverage maker to supply water to the ingredient supplier,wherein introducing the additive into the fermentation tank is performed when the temperature sensed by the temperature sensor is less than or equal to a first reference temperature, and wherein terminating cooling of the fermentation tank is performed when the sensed temperature is less than or equal to a second reference temperature which is lower than the first reference temperature.

### [Technical Problem]

An object to be achieved by the present disclosure is to provide a beverage maker which injects air into a mixture of an ingredient and water in a fermentation tank or a fermentation container and increases dissolved oxygen of the mixture, thereby enabling smooth fermentation.

Another object to be achieved by the present disclosure is to provide a beverage maker which prevents backflow of bubbles generated from a mixture when air is injected into the mixture.

### [Technical Solution]

The beverage maker according to an embodiment of the present disclosure may control a temperature controller to perform cooling of the fermentation tank accommodating the mixture,
and, when a temperature of the fermentation tank sensed by a temperature sensor is less than or equal to a reference temperature, may finish the cooling of the fermentation tank, and may control the air pump to supply air to the fermentation tank. Accordingly, bubbles generated in the fermentation tank when air is supplied smoothly burst, and backflow caused by accumulation of bubbles can be prevented.

According to an embodiment, the beverage maker introduces an additive into the fermentation tank in the middle of cooling the fermentation tank, such that the total time required to make a beverage can be reduced in comparison to the case in which the additive is introduced after the fermentation tank is cooled.

According to an embodiment, the beverage maker may supply water to the ingredient supplier by using a water supply pump in order to smoothly introduce the additive accommodated in the ingredient supplier into the fermentation tank.

According to an embodiment, the beverage maker may open an ingredient supply valve between the water supply pump and the ingredient supplier, and may close a bypass valve between the water supply pump and the fermentation tank in order to supply water to the ingredient supplier.

According to an embodiment, the beverage maker may close the ingredient supply valve between the air pump and the ingredient supplier, and may open the bypass valve in order to supply air pumped by the air pump to the fermentation tank.

### [Advantageous Effects]

According to various embodiments of the disclosure, the beverage maker increases dissolved oxygen in the mixture by supplying air to the mixture of ingredients and water, such that the mixture can be smoothly fermented.

In addition, the beverage maker can prevent deterioration of bubble burst caused by viscosity of the mixture by supplying air after finishing the cooling step for the mixture of beverage ingredients and water in the fermentation tank. Accordingly, a problem of backflow of bubbles to the gas discharge channel, caused by accumulation of bubbles in the fermentation tank, can be solved. By preventing the backflow of bubbles, degradation of hygiene of the gas discharge channel can be prevented and the beverage can be smoothly made.

### [Description of Drawings]

Fig. 1 is a view illustrating a configuration of a beverage maker.
Fig. 2 is a flowchart illustrating a method for controlling the beverage maker.
Fig. 3 is a view to explain a bubble backflow phenomenon generated in a related-art beverage maker.
Fig. 4 is a schematic block diagram illustrating a control configuration of the beverage maker.
Fig. 5 is a flowchart to explain a beverage making operation of the beverage maker.
Fig. 6 is a graph illustrating a change in temperature which is sensed by a temperature sensor when the beverage maker is operated according to the embodiment shown in Fig. 5.
Fig. 7 is a view illustrating a beverage making operation performed by the beverage maker before a first time in the graph shown in Fig. 6.
Fig. 8 is a view illustrating a beverage making operation performed by the beverage maker between the first time and a second time in the graph shown in Fig. 6.
Fig. 9 is a view illustrating a beverage making operation performed by the beverage maker at the second time in the graph shown in Fig. 6.
Fig. 10 is a view illustrating a beverage making operation performed by the beverage maker at a third time in the graph shown in Fig. 6.
Fig. 11 is a view illustrating a beverage making operation performed by the beverage maker after the third time in the graph shown in Fig. 6.
Fig. 12 is a flowchart to explain another example, not part of the invention, of the beverage making operation of the beverage maker.

### [Best Mode]

Hereinafter, detailed embodiments of the present disclosure will be described in detail with reference to the accompanying drawings.

Although beer is exemplified as a beverage made by using a beverage maker in this specification, a kind of beverages is not limited to the beer that is capable of being made by using the beverage maker. For example, various kinds of beverages may be made through the beverage maker according to embodiments.

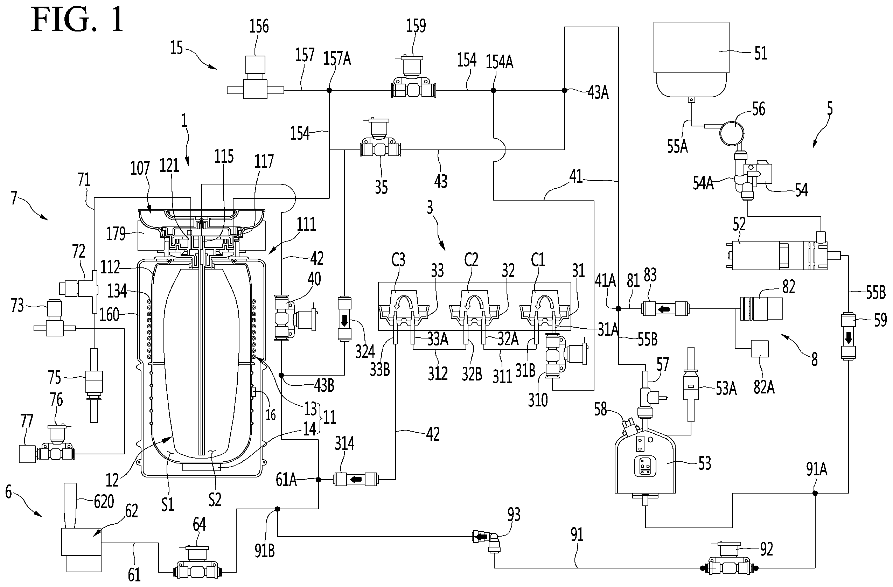

Fig. 1 is a view illustrating a configuration of the beverage maker according to an embodiment.

A beverage maker may include a fermentation module 1. A beverage may be fermented in the fermentation module 1.

The beverage maker may include a temperature controller that controls an inner temperature of the fermentation module 1

The beverage maker may include a water supply module 5. The water supply module 5 may supply water.

The beverage maker may include ingredient supplier 3 provided with ingredient accommodating parts 31, 32, and 33 in which ingredients required for making the beverage are accommodated

The beverage maker may include main channels 41 and 42 connecting the water supply module 5 to the fermentation module 1.

The beverage maker may include a beverage dispenser 6 for dispensing the beverage made in the fermentation module 1 to the outside

The beverage dispenser 6 may be connected to a second main channel 42. Thus, the beverage dispensed from the fermentation module 1 may be guided to the beverage dispenser 6 by passing through a portion of the second main channel 42.

The beverage maker may further include a gas discharger 7. The gas discharger 7 may be connected to the fermentation module 1 to discharge a gas generated while the beverage is made.

The beverage maker may further include an air injector 8 for injecting air. The air injector 8 may be connected to the water supply module 5 or a first main channel 41. The air injector 8 may include an air pump 82.

The beverage maker may further include an air controller 15 controlling a pressure between an inner wall of a fermentation tank 112 and an outer surface of a fermentation container 12

The beverage maker may further include a sub channel 91. The sub channel 91 may connect the water supply module 5 to the beverage dispenser 6.

Hereinafter, the fermentation module 1 will be described in detail.

The fermentation module 1 may include a fermentation tank module 111 having an opening and fermentation lid 107 opening and closing the opening.

The fermentation tank module 111 may include a fermentation case 160 and a fermentation tank 112 accommodated in the fermentation case 160 and having an inner space S1. The insulation part (not shown) may be provided between the fermentation case 160 and the fermentation tank 112. The fermentation tank module 111 may further include a lid seating body 179 on which the fermentation lid 107 is seated.

Each of the fermentation case 160 and the fermentation tank 112 may be provided as an assembly of a plurality of members. The fermentation case 160 may define an outer appearance of the fermentation tank module 111.

The fermentation lid 107 may seal the inside of the fermentation tank module 111 and be disposed on the fermentation tank module 111 to cover the opening. A main channel, particularly, a main channel connecting portion 115 connected to a second main channel 42 may be provided in the fermentation lid 107.

A fermentation container 12 may be accommodated in the fermentation tank 112.

The fermentation container 12 may be provided as a separate container so that the beverage ingredients and the made beverage stain an inner wall of the fermentation tank 112. The fermentation container 12 may be separably disposed on the fermentation tank 112. The fermentation container 12 may be seated on the fermentation tank 112 to ferment the beverage within the fermentation tank 112. After the fermentation container 12 is used, the fermentation container 12 may be withdrawn to the outside of the fermentation tank 112.

The fermentation container 12 may be a pack containing the ingredients for making the beverage. The fermentation container 12 may be made of a flexible material. Thus, the fermentation container 12 may be easily inserted into the fermentation tank 112 and be contracted and expanded by a pressure. However, this embodiment is not limited thereto. For example, the fermentation container 12 may be made of a PET material.

The fermentation container 12 may have a beverage making space S2 in which the beverage ingredients are accommodated, and the beverage is made. The fermentation container 12 may have a size less than that of the inner space S1 of the fermentation tank 112.

The fermentation container 12 may be inserted and accommodated into the fermentation tank 112 in the state in which the ingredients are contained in the fermentation container 12. The fermentation container 12 may be inserted into the fermentation tank 112 and then accommodated in the fermentation tank 112 in the state in which the fermentation lid 107 is opened.

The fermentation lid 107 may seal the fermentation tank 112 after the fermentation container 12 is inserted into the fermentation tank 112. The fermentation container 12 may assist the fermentation of the ingredient in the state in which the fermentation container 12 is accommodated in the space S1 that is sealed by the fermentation container 112 and the fermentation lid 107. The fermentation container 12 may be expanded by the pressure therein during the making of the beverage. The fermentation container 12 may be pressed by the air within the fermentation tank 112 when the beverage contained in the fermentation container 12 is dispensed, and the air is supplied between an inner surface of the fermentation tank 112 and the fermentation container 12.

The fermentation container 12 may be accommodated in the fermentation tank 112, and the fermentation lid 107 is closed such that the main channel connecting portion 115 of the fermentation lid 107 connects the second main channel 42 and the beverage making space S2 in the fermentation container 12.

Accordingly, water supplied from the water supply module 5 when a beverage is made may be introduced into the fermentation container 12 through the second main channel 42 and the main channel connecting portion 115. In addition, ingredients accommodated in the ingredient supplier 3 may be introduced into the fermentation container 12 through the second main channel 42 and the main channel connecting portion 115. In addition, the beverage made in the fermentation container 12 may pass through the main channel connecting portion 115, the second main channel 42, and the beverage dispensing channel 61, and may be dispensed to the outside through the dispenser 62.

The beverage maker of the present disclosure may be implemented to introduce water and ingredients which are supplied when the beverage is made, into the fermentation container 12 through the main channel connecting portion 115 formed on the fermentation lid 107, which can be opened and closed. In addition, the beverage maker may be implemented to dispense the beverage accommodated in the fermentation container 12 to the dispenser 62 through the main channel connecting portion 115. That is, the beverage maker of the present disclosure is implemented to introduce water and ingredients or to dispense the beverage through the main channel connecting portion 115 formed in the fermentation lid 107 which can be opened and closed, thereby simplifying a configuration for connecting between the second main channel 42 and the fermentation container 12.

The fermentation tank 112 may be disposed in the fermentation case 160. The fermentation tank 112 may have an outer circumference surface and a bottom surface, which are spaced apart from the inner surface of the fermentation case 160. In more detail, the outer circumference the fermentation tank 112 may be spaced apart from an inner circumference of the fermentation case 160, and an outer bottom surface of the fermentation tank 112 may be spaced apart from an inner bottom surface of the fermentation case 160.

The insulation part (not shown) may be provided between the fermentation case 160 and the fermentation tank 112. The insulation part may be disposed in the fermentation case 160 to surround the fermentation tank 112. Thus, the fermentation tank 112 may be constantly maintained in temperature.

The insulation part may be made of a material such as foamed polystyrene or polyurethane which has high thermal insulating performance and absorbs vibration.

The fermentation tank 112 may include a temperature sensor 16 for measuring the temperature of the inner fermentation tank 112.

The temperature sensor 16 may be mounted on a circumferential surface of the fermentation tank 112. The temperature sensor 16 may be disposed below an evaporator 134 wound around the fermentation tank 112.

Hereinafter, the temperature controller 11 will be described in detail.

The temperature controller 11 may change an inner temperature of the fermentation tank module 111. In more detail, the temperature controller 11 may change a temperature of the fermentation tank 112.

The temperature controller 11 may heat or cool the fermentation tank 112 to control a temperature of the fermentation tank 112 at an optimal temperature for fermenting the beverage.

The temperature controller 11 may include at least one of a refrigerant cycle device 13 and a heater 14. However, this embodiment is not limited thereto. For example, the temperature controller 11 may include a thermoelement TEM.

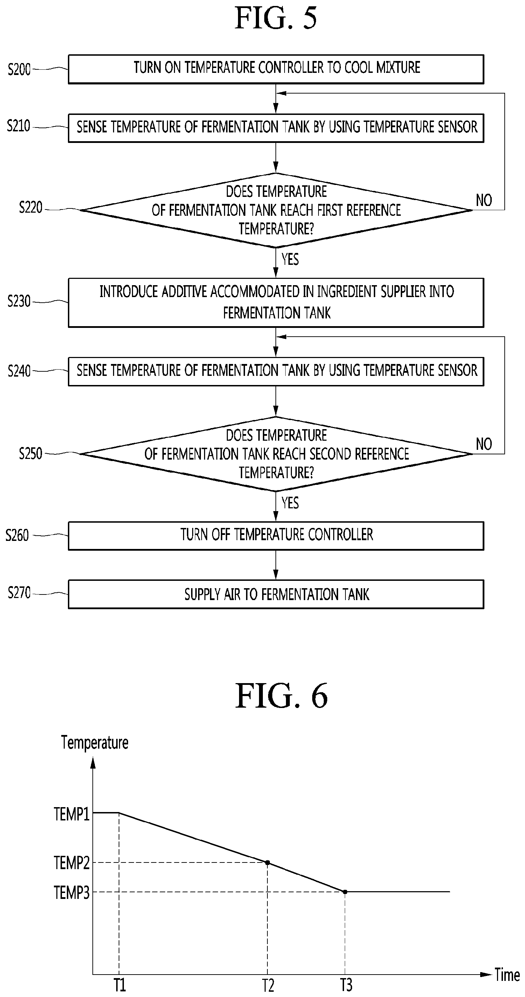

The refrigerant cycle device 13 may control the temperature of the fermentation tank 112 to cool a temperature of the fermentation tank 112. The refrigerant cycle device 13 may include a compressor 131 (referring to FIG. 6), a condenser, an expansion mechanism, and an evaporator 134.

The evaporator 134 may be disposed to contact an outer surface of the fermentation tank 112. The evaporator 134 may be provided as an evaporation tube wound around an outer surface of the fermentation tank 112. The evaporator 134 may be accommodated between the fermentation tank 112 and the insulation part to cool the fermentation tank 112 that is insulated by the insulation part.

The temperature controller 11 may further include a heater 14 heating the fermentation tank 112. The heater 14 may be installed to contact the bottom surface of the fermentation tank 112. The heater 14 may be provided as a heat generation heater that generates heat when power is applied. The heater 14 may be provided as a plate heater.

Thus, the natural convection of a fluid may be generated inside the fermentation tank 112 by the evaporator 134 and the heater 14, and temperature distribution inside the fermentation tank 112 and the fermentation container 12 may be uniform.

Hereinafter, the main channels 41 and 42 and a bypass channel 43 will be described.

As described above, the main channels 41 and 42 may include a first main channel 41 connecting the water supply module 5 to the ingredient supplier 3 and a second main channel 42 connecting the ingredient supplier 3 to the fermentation module 1.

That is, the first main channel 41 may guide water supplied from the water supply module 5 to the ingredient supplier 3, and the second main channel 42 may guide the mixture of the ingredients and the water, which are extracted from the ingredient supplier 3, to the fermentation module 1.

The first main channel 41 may have one end 41A connected to the water supply module 5 and the other end connected to the ingredient supplier 3, more particularly, an inlet 31A of an initial ingredient accommodating part 31, which will be described below in more detail.

An ingredient supply valve 310 opening and closing the first main channel 41 may be installed in the first main channel 41. The ingredient supply valve 310 may be provided in the ingredient supplier 3.

The ingredient supply valve 310 may be opened when additives accommodated in the ingredient accommodating parts 31, 32, and 33 are put to open the first main channel 41. The ingredient supply valve 310 may be opened when the ingredient accommodating parts 31, 32, and 33 are cleaned to open the first main channel 41.

The second main channel 42 may have one end connected to a main channel connecting portion 115 of the fermentation module 1 and the other end connected to the ingredient supplier 3, more particularly, an outlet 33B of a final ingredient accommodating part 33, which will be described below in more detail.

A main valve 40 opening and closing the second main channel 42 may be installed in the second main channel 42. Also, a main check valve 314 for allowing the fluid to flow from the ingredient supplier 3 to the fermentation module 1 may be installed in the second main channel 42. That is, the main check valve 314 may prevent the fluid from flowing back to the ingredient supplier 3.

The main check valve 314 may be disposed between the main valve 40 and the ingredient supplier 3 with respect to the second main channel 42.

The main valve 40 may be opened when the water is supplied to the fermentation container 12 to open the second main channel 42. The main valve 40 may be closed while the fermentation tank 112 is cooled to close the second main channel 42. The main valve 40 may be opened when the air is injected into the fermentation container 12 to open the second main channel 42. The main valve 40 may be opened when the additives are supplied into the fermentation container 1 to open the second main channel 42. The main valve 40 may be closed to seal the inside of the fermentation container 12 during the fermentation of the ingredients. The main valve 40 may be closed to seal the inside of the fermentation container 12 when the beverage is aged and stored. The main valve 40 may be opened when the beverage is dispensed by the beverage dispenser 6 to open the second main channel 4. The beverage within the fermentation container 1 may pass through the main valve 40 to flow to the beverage dispenser 6.

The main channels 41 and 42 may be provided as one continuous channel when the beverage maker does not include the ingredient supplier 3.

When the beverage maker includes the ingredient supplier 3, the beverage maker may further include a bypass channel 43 configured to allow the water or the air to bypass the ingredient accommodating parts 31 and 32.

The bypass channel 43 may bypass the ingredient accommodating parts 31, 32, and 33 and then be connected to the first main channel 41 and the second main channel 42.

The bypass channel 43 may have one end 43A connected to the first main channel 41 and the other end 43B connected to the second main channel 42. In more detail, the bypass channel 43 may have one end 43A connected to the first main channel 41 between the water supply module 5 and the ingredient supply valve 310 and the other end 43B connected to the second main channel 42 between the main valve 40 and the ingredient supplier 3.

A bypass valve 35 opening and closing the bypass channel 43 may be installed in the bypass channel 43.

The bypass valve 35 may be opened when the water supplied from the water supply module 5 is supplied to the fermentation container 12 to open the bypass channel 43. The bypass valve 35 may be opened when the air injected from the air injector 8 is supplied to the fermentation container 12 to open the bypass channel 43. The bypass valve 35 may be opened when the bypass channel 43 is cleaned to open the bypass channel 43.

Also, a bypass check valve 324 allowing the fluid to flow from the first main channel 41 to the second main channel 42 may be installed in the bypass channel 43. That is, the fluid may flow only from the first main channel 41 to the second main channel 42 but may not flow in the opposite direction.

The bypass check valve 324 may be disposed between the bypass valve 35 and the second main channel 42 with respect to the bypass channel 43.

Hereinafter, the ingredient supplier 3 will be described in detail.

When beer is made by using the beverage maker, the ingredients for making the beer may include water, malt, yeast, hop, flavouring additives, and the like.

The beverage maker may include all of the ingredient supplier 3 and the fermentation container 12. The ingredients for making the beverage may be accommodated to be divided into the ingredient supplier and fermentation container 12. A portion of the ingredients for making the beverage may be accommodated in the fermentation container 12, and the remaining ingredients may be accommodated in the ingredient supplier 3. The remaining ingredients accommodated in the ingredient supplier 3 may be supplied to the fermentation container 12 together with the water supplied from the water supply module 5 and mixed with the portion of the ingredients accommodated in the fermentation container 12.

A main ingredient that is essential for making the beverage may be accommodated in the fermentation container 12, and the additives added to the main ingredient may be accommodated in the ingredient supplier 3. In this case, the additives accommodated in the ingredient supplier 3 may be mixed with the water supplied from the water supply module 5 and supplied to the fermentation container 12 and then be mixed with the main ingredient accommodated in the fermentation container 12.

The main ingredient accommodated in the fermentation container 12 may have a capacity greater than that of other ingredients. For example, when the beer is made, the main material may be the malt of the malt, the yeast, the hop, and the flavouring additives. Also, the additive accommodated in the ingredient supplier 3 may be the other ingredient except for the malt of the ingredient for making the beer, for example, the yeast, the hop, and the flavouring additives.

The beverage maker may not include the ingredient supplier 3 but include the fermentation container 12. In this case, the main ingredient may be accommodated in the fermentation container 12, and the user may directly put the additives into the fermentation container 12.

If the beverage maker includes all the ingredient supplier 3 and the fermentation container 12, the beverage may be more easily made. Hereinafter, the case in which the beverage maker includes all of the ingredient supplier 3 and the fermentation container, will be described as an example. However, this embodiment is not limited to the case in which the beverage maker includes all of the ingredient supplier 3 and the fermentation container 12.

The ingredients within the fermentation container 12 may be fermented as time elapses, and the beverage made in the fermentation container 12 may flow to the second main channel 42 through the main channel connecting portion 115 and also flow from the second main channel 42 to the beverage dispenser 6 so as to be dispensed.

The ingredients that are necessary for making the beverage may be accommodated in the ingredient supplier 3, and the water supplied from the water supply module 5 may pass through ingredient supplier 3. For example, when the beverage made in the beverage maker is beer, the ingredient accommodated in the ingredient supplier 3 may be yeast, hop, flavouring additives, and the like.

The ingredient accommodated in the ingredient supplier 3 may be directly accommodated into an ingredient accommodating parts 31, 32, and 33 provided in the ingredient supplier 3. At least one ingredient accommodating part 31, 32, and 33 may be provided in the ingredient supplier 3. The plurality of ingredient accommodating parts 31, 32, and 33 may be provided in the ingredient supplier. In this case, the ingredient accommodating parts 31, 32, and 33 may be partitioned with respect to each other.

Inlets 31A, 32A, and 33A through which the fluid is introduced and outlets 31B, 32B, and 33B through which the fluid is discharged may be provided in the ingredient accommodating parts 31, 32, and 33, respectively. The fluid introduced into the inlet of one ingredient accommodating part may be mixed with the ingredients within the ingredient accommodating parts and then discharged through the outlet.

The ingredients accommodated in the ingredient supplier 3 may be accommodated in ingredient containers C1, C2, and C3. In this case, the ingredient containers C1, C2, and C3 may be accommodated in the ingredient accommodating parts 31, 32, and 33, and each of the ingredient accommodating parts 31, 32, and 33 may be called a ingredient container mounting part.

The ingredient containers C1, C2, and C3 may be provided in the form of a capsule or a pod, but is not limited thereto.

When the ingredients are accommodated in the ingredient containers C1, C2, and C3, the ingredient supplier 3 may be configured so that the ingredient containers C1, C2, and C3 are seated and withdrawn. The ingredient supplier may be provided as a ingredient container kit assembly in which the ingredient containers C1, C2, and C3 are separably accommodated.

For example, a first additive, a second additive, and a third additive may be accommodated in the ingredient supplier 3. The first additive may be yeast, the second additive may be hop, and the third additive may be a flavouring additive. The ingredient supplier 3 may include a first ingredient container mounting part 31 in which a first ingredient container C1 containing the first additive is accommodated, a second ingredient container mounting part 32 in which a second ingredient container C2 containing the second additive is accommodated, and a third ingredient container mounting part 33 in which a third ingredient container C3 containing the third additive is accommodated.

The ingredients contained in the ingredient accommodating part or the ingredient containers C1, C2, and C3 may be extracted by a water pressure of the water supplied from the water supply module 5.

When the ingredients are extracted by the water pressure, the water supplied from the water supply module 5 to the first main channel 41 may pass through the ingredient accommodating part or the ingredient containers C1, C2, and C3 and then be mixed with the ingredients, and the ingredients accommodated in the ingredient accommodating part or the ingredient containers C1, C2, and C3 may flow to the second main channel together with the water.

A plurality of additives different from each other may be accommodated to be divided in the ingredient supplier 3. For example, when the beer is made, the plurality of additives accommodated in the ingredient supplier 3 may be the yeast, the hop, and the flavouring additive, which are accommodated to be divided from each other.

When the plurality of ingredient accommodating parts are provided in the ingredient supplier 3, the plurality of ingredient accommodating parts 31, 32, and 33 may be connected in series to each other in a flow direction of the water.

In more detail, the ingredient supplier 3 may include at least one connecting channel 311 and 312 connecting the outlet of one ingredient accommodating part of the plurality of ingredient accommodating parts 31, 32, and 33 to the inlet of the other ingredient accommodating part.

Also, the plurality of ingredient accommodating parts 31, 32, and 33 may include an initial ingredient accommodating part 31 and a final ingredient accommodating part 33. The plurality of ingredient accommodating parts 31, 32, and 333 may further include an intermediate ingredient accommodating part 32.

The inlet 31A of the initial ingredient accommodating part 31 may be connected to the first main channel 41, and the outlet 33B of the final ingredient accommodating part 33 may be connected to the second main channel 42.

The intermediate ingredient accommodating part 32 may be disposed between the first ingredient accommodating part 31 and the second ingredient accommodating part 33 in the flow direction of the fluid. The inlet 32A and the outlet 32B of the intermediate ingredient accommodating part 32 may be connected to the connecting channels 311 and 312 different from each other.

As illustrated in Fig. 1, when three ingredient accommodating parts are provided in the ingredient supplier 3, the outlet 31B of the final ingredient accommodating part 31 may be connected to the inlet 32A of the intermediate ingredient accommodating part 32 through the first connecting channel 311, and the outlet 32B of the intermediate ingredient accommodating part 32 may be connected to the inlet 33A of the final ingredient accommodating part 33 through the second connecting channel 312.

In this case, the water introduced into the inlet 31A of the final ingredient accommodating part 31 through the first main channel 41 may flow to the first connecting channel 311 through the outlet 31B together with the first additive accommodated in the initial ingredient accommodating part 31.

The fluid (the mixture of the water and the first additive) introduced into the inlet 32A of the intermediate ingredient accommodating part 32 through the first main channel 311 may flow to the second connecting channel 312 through the outlet 32B together with the second additive accommodated in the intermediate ingredient accommodating part 32.

The fluid (the mixture of the water and the first and second additives) introduced into the inlet 33A of the final ingredient accommodating part 33 through the second main channel 312 may flow to the second connecting channel 42 through the outlet 33B together with the third additive accommodated in the final ingredient accommodating part 33.

The fluid (the mixture of the water and the first, second, and third additives) discharged through the second main channel 42 may be guided to the main channel connecting portion 115 of the fermentation module 1 and then introduced into the fermentation container 12.

However, the configuration of the ingredient supplier is not limited thereto. For example, when the intermediate ingredient accommodating part is not provided, two ingredient accommodating parts may be provided in the ingredient supplier 3. In this case, one ingredient accommodating part may be the initial ingredient accommodating part, and the other ingredient accommodating part may be the final ingredient accommodating part. The outlet of the initial ingredient accommodating part and the inlet of the final ingredient accommodating part may be connected to each other by the connecting channel.

For another example, when the intermediate ingredient accommodating part is provided in plurality, four or more ingredient accommodating parts may be provided in the ingredient supplier 3. In this case, one ingredient accommodating part may be the initial ingredient accommodating part, the other ingredient accommodating part may be the final ingredient accommodating part, and the remaining ingredient accommodating part may be the intermediate ingredient accommodating part. In this case, since the connection between the ingredient accommodating parts in series is easily understood by the person skilled in the art, their detailed descriptions will be omitted.

Since the plurality of ingredient accommodating parts 31, 32, and 33 are connected in series to each other, the channel configuration of the ingredient supplier 3 may be simplified. Also, since the additives contained in the ingredient containers C1, C2, and C3 are extracted at once, a time taken to extract the additives may decrease. Also, since the user does not have to worry about the mounting order of the ingredient containers C1, C2, and C3, malfunction due to the mounting of the ingredient containers C1, C2, and C3 in erroneous order may not occur. Also, the ingredient supplier 3 may be minimized in water leakage point to improve reliability.

When the ingredients accommodated in the ingredient supplier 3 are accommodated in the ingredient containers C1, C2, and C3, the initial ingredient accommodating part 31 may be called an initial ingredient container mounting part, the intermediate ingredient accommodating part 32 may be called an intermediate ingredient container mounting part, and the final ingredient accommodating part 33 may be a final ingredient container mounting part.

Hereinafter, the water supply module 5 will be described in detail.

The water supply module 5 may include a water tank 51, a water supply pump 52 for pumping water within the water tank 51, and a water supply heater 53 for heating the water pumped by the water supply pump 52.

The water supply module 5 may further include the water supply pump 52 for pumping water within the water tank 51 and the water supply heater 53 for heating the water pumped by the water supply pump 52.

The water tank 51 and the water supply pump 52 may be connected to a water tank discharge channel 55A, and the water contained in the water tank 51 may be introduced into the water supply pump 52 through the water tank discharge channel 55A.

The water supply pump 52 and one end 41A of the first main channel 41 may be connected to a water supply channel 55B, and the water discharged from the water supply pump may be guided to the first main channel 41 through the water supply channel 55B.

A flow meter 56 for measuring a flow rate of the water discharged from the water tank 51 may be installed in the water tank discharge channel 55A.

Also, a flow rate control valve 54 for controlling the flow rate of the water discharged from the water tank 51 may be installed in the water tank discharge channel 55A. The flow rate control valve 54 may include a step-in motor.

Also, a thermistor 54A for measuring a temperature of the water discharged from the water tank 51 may be installed in the water tank discharge channel 55A. The thermistor 54A may be built in the flow rate control valve 54.

A water supply check valve 59 for preventing the water from flow back to the water supply pump 52 may be installed in the water supply channel 55B.

The water supply heater 53 may be installed in the water supply channel 55B.

A thermal fuse 58 for interrupting a circuit to cutoff current applied to the water supply heater 53 when a temperature is high may be installed in the water supply heater 53.

The water supply module 5 may further include a safety valve 53A. The safety valve 53A may communicate with the inside of the heater case of the water supply heater 53. The safety valve 53A may restrict a maximum inner pressure of the heater case. For example, the safety valve 53A may restrict the maximum inner pressure of the heater case to a pressure of about 3.0 bar.

The water supply module 5 may further include a water supply temperature sensor 57 for measuring a temperature of the water passing through the water supply heater 53. The water supply temperature sensor 57 may be installed in the water supply heater 53. Alternatively, the water supply temperature sensor 57 may be disposed at a portion of the water supply channel 55B behind the water supply heater 53 in the flow direction of the water. Also, the water supply temperature sensor 57 may be installed in the first main channel 41.

When the water supply pump 52 is driven, the water within the water tank 51 may be introduced into the water supply pump 52 through the water tank discharge channel 55A, and the water discharged from the water supply pump 52 may be heated in the water supply heater 53 while flowing through the water supply channel 55B and then be guided to the first main channel 41.

Hereinafter, the beverage dispenser 6 will be described.

The beverage dispenser 6 may be connected to the second main channel 42.

In more detail, the beverage dispenser 6 may include a dispenser 62 for dispensing the beverage and a beverage dispensing channel 61 connecting to the dispenser 62 to the second main channel 42.

The beverage dispensing channel 61 may have one end 61A connected between the main check valve 314 and the main valve 40 with respect to the second main channel 42 and the other end connected to the dispenser 62.

A beverage dispensing valve 64 opening and closing the beverage dispensing channel 61 may be installed in the beverage dispensing channel 61.

The beverage dispensing valve 64 may be opened when the beverage is dispensed to open the beverage dispensing channel 61. The beverage dispensing valve 64 may be opened when residual water is removed to open the beverage dispensing channel 61. The beverage dispensing valve 64 may be opened when the beverage dispenser is cleaned to open the beverage dispensing channel 61.

An anti-foaming part (not shown) may be provided in the beverage dispensing channel 61, and an amount of foam of the beverage flowing from the second main passage 42 to the beverage dispensing channel 61 may be minimized while passing through the anti-foaming part. A mesh for filtering the foam may be provided in the anti-foaming part 63.

When the beverage is dispensed, the beverage dispensing valve 64 may be opened. When the beverage is not dispensed, the closed state of the beverage dispensing valve 64 may be maintained.

Hereinafter, the gas discharger 7 will be described in detail.

The gas discharger 7 may be connected to the fermentation module 1 to discharge a gas generated in the fermentation container 12.

In more detail, the gas discharger 7 may include a gas discharge channel 71 connected to the fermentation module , a gas pressure sensor 72 installed in the gas discharge channel 71, and a gas discharge valve 73 connected behind the gas pressure sensor 72 in the gas discharge channel 71 in the gas discharge direction.

The gas discharge channel 71 may be connected to the fermentation module 1, particularly, the fermentation lid 107. A gas discharge channel connecting portion 121 to which the gas discharge channel 71 is connected may be provided in the fermentation lid 107.

The gas within the fermentation container 12 may flow into the gas discharge channel 71 and the gas pressure sensor 72 through the gas discharge channel connecting portion 121. The gas pressure sensor 72 may detect a pressure of the gas discharged to the gas discharge channel 71 through the gas discharge channel connecting portion 121 within the fermentation container 12.

The gas discharge valve 73 may be turned to be opened when the air is injected into the fermentation container 12 by the air injector 8. The beverage maker may uniformly mix the malt with the water by injecting the air into the fermentation container 12. Here, foam generated in the liquid malt may be discharged from the upper portion of the fermentation container 12 to the outside through the gas discharge channel 71 and the gas discharge valve 73.

The gas discharge valve 73 may be turned on to detect fermentation during the fermentation process and then turned off to be closed.

The gas discharger 7 may further include the safety valve 75 connected to the gas discharge channel 71. The safety valve 75 may be connected behind the gas pressure sensor 71 in the gas discharge channel 71 in the gas discharge direction. The safety valve 75 may restrict a maximum pressure of the fermentation container 12 and the gas discharge channel 71. For example, the safety valve 75 may restrict the maximum pressure of the fermentation container 12 and the gas discharge channel 71 to a pressure of about 3.0 bar.

The gas discharger 7 may further include a pressure release valve 76.

The pressure release valve 76 may be connected to the gas discharge channel 71. The pressure release valve 76 and the gas discharge valve 73 may be selectively opened/closed.

The gas discharge channel 71 may be branched to be respectively connected to the gas discharge valve 73 and the pressure release valve 76.

A noise reducing device 77 may be mounted on the pressure release valve 76. The noise reducing device 77 may include at least one of an orifice structure and a muffler structure.

Even though the pressure release valve 76 is opened, an inner pressure of the fermentation container 12 may gradually decrease by the noise reducing device 77.

When the fermentation of the beverage progresses, the pressure release valve 76 may be opened to release the pressure in the state in which the inner pressure of the fermentation container 12 increases. The noise reducing device 77 may effectively reduce noise generated due to a difference in pressure of the inside and outside of the fermentation container 12.

The pressure release valve 76 may be controlled to be open or closed in the fermentation process in which the inner pressure is higher.

Hereinafter, the air injector 8 will be described.

The air injector 8 may be connected to the water supply module 55B or the first main channel 41 to inject air. Hereinafter, for convenience of description, the case in which the air injector 8 is connected to the water supply channel 55B will be described as an example.

The air injector 8 may be connected to an opposite side of a sub channel 91, which will be described later, with respect to the water supply heater 53.

In this case, the air injected into the air injector 8 may pass through the water supply heater 53 to flow to the sub channel 91 together with the residual water within the water supply heater 53. Thus, the residual water within the water supply heater 53 may be removed to maintain a clean state of the water supply heater 53.

Alternatively, the air injected from the air injector 8 to the first main channel 41 may successively pass through the bypass channel 43 and the second main channel 42 and then be injected into the fermentation container 12. Thus, stirring or aeration may be performed in the fermentation container 12.

Alternatively, the air injected from the air injector 8 to the first main channel 41 may be guided to the ingredient supplier 3 to flow to the ingredient container mounting parts 31, 32, and 33. The residual water or residues within the ingredient containers C1, C2, and C3 or the ingredient container mounting parts 31, 32, and 33 may flow the second main channel 42 by the air injected by the air injector 8. The ingredient containers C1, C2, and C3 and the ingredient container mounting parts 31, 32, and 33 may be cleanly maintained by the air injected by the air injector 8.

The air injector 8 may include an air injection channel connected to the water supply channel 55B or the first main channel 41 and an air pump 82 connected to the air injection channel 81. The air pump 82 may pump the air to the air injection channel 81.

An air injection check valve 83 preventing the water flowing to the water supply channel 55B by the water supply pump 52 from being introduced into the air pump 82 through the air injection channel 81 may be installed in the air injection channel 81.

The air injector 8 may further include an air filter 82A. The air filter 82A may be provided in a suction part of the air pump 82, and thus, external air may be suctioned into the air pump 82 by passing through the air filter 82A. Thus, the air pump 82 may inject clean air into the air injection channel 81.

Hereinafter, the air controller 15 will be described in detail.

The air controller 15 may control a pressure between an inner wall of the fermentation tank 112 and an outer surface of the fermentation container 12.

The air controller 15 may supply air into a space between the fermentation container 12 and the fermentation tank 112. On the other hand, the air controller 15 may exhaust the air within the space between the fermentation container 12 and the fermentation tank 112 to the outside.

The air controller 15 may include an air supply channel 154 connected to the fermentation module 1 and an exhaust channel 157 connected to the air supply channel 154 to exhaust the air to the outside.

The air supply channel 154 may have one end connected to the first main channel 41 and the other end connected to the fermentation module 1.

The air supply channel 154 may be connected to the fermentation module 1, particularly, the fermentation lid 107. An air supply channel connecting portion 117 to which the air supply channel 154 is connected may be provided in the fermentation module 1. The air supply channel connecting portion 117 may communicate with the space between the inner wall of the fermentation tank 112 and the outer surface of the fermentation container 12.

The air injected from the air injector 8 to the first main channel 41 may be guided between the outer surface of the fermentation container 12 and the inner wall of the fermentation tank 112 through the air supply channel 154.

The air injector 8 may function as an air supplier for supplying the air into the space between the fermentation container 12 and the fermentation tank 112 together with the air supply channel 154.

As described above, the air supplied into the fermentation tank 112 may press the fermentation container 12 between the outer surface of the fermentation container 12 and the inner wall of the fermentation tank 112.

The beverage within the fermentation container 12 may be pressed by the fermentation container 12 that is pushed by the air. When the main valve 40 and the beverage dispensing valve 64 are opened, the beverage may pass through the main channel connecting portion 115 to flow to the second main channel 42. The beverage flowing from the fermentation container 12 to the second main channel 42 may be dispensed to the outside through the beverage dispenser 6.

The air pump 82 may supply air so that a predetermined pressure occurs between the fermentation container 12 and the fermentation tank 112. Thus, a pressure at which the beverage within the fermentation container 12 is easily dispensed may be occur between the fermentation container 12 and the fermentation tank 112.

The air pump 82 may be maintained in the turn-off state while the beverage is dispensed. When the beverage is completely dispensed, the air pump 82 may be driven for next beverage dispensing and then stopped.

Thus, when the beverage is completely made, the beverage maker may dispense the beverage within the fermentation container 12 to the beverage dispensing channel module 6 in the state in which the fermentation container 1 is disposed within the fermentation module 1 without withdrawing the fermentation container 12 to the outside of the fermentation module 1.

The air controller 15 may include a separate air supply pump with respect to the air injector 8. In this case, the air supply channel 154 may be connected to the air supply pump, but may not connected to the first main channel 41. However, the injection of the air into the fermentation container 12 by the air pump 82 and the supplying of the air into the space between the fermentation container 12 and the fermentation tank 112 may be combined with each other to realize a compact product and reduce a manufacturing cost.

The exhaust channel 157 may function as an air exhaust passage, through which the air between the fermentation container 12 and the fermentation tank 112 is exhausted to the outside, together with a portion of the air supply channel 154.

The exhaust channel 157 may be disposed outside the fermentation module 1. The exhaust channel 157 may be connected to a portion of the air supply channel 154, which is disposed outside the fermentation tank 112.

The air supply channel 154 may include a first channel connected between a connecting portion 157A connected to the first main channel 41 and the exhaust channel 157 and a second channel connected between the connecting portion 154A connected to the exhaust channel 157 and the air supply channel connecting portion 117. The first channel may be an air supply channel for guiding the air pumped by the air pump 82 to the second channel. Also, the second channel may be an air supply and exhaust-combined channel for supplying the air passing through the air supply channel into the space between the fermentation tank 112 and the fermentation container 12 or guiding the air discharged from the space between the fermentation tank 112 and the fermentation container 12 t the connecting channel 157.

The exhaust channel 157 may be connected to the exhaust valve 156 for opening and closing the exhaust channel 157.

The exhaust valve 156 may be opened so that the air between the fermentation container 12 and the fermentation tank 112 is exhausted to the outside when the fermentation container 12 is expanded while the beverage is made. The exhaust valve 156 may be controlled to be opened when the water is supplied by the water supply module 5. The exhaust valve 156 may be controlled to be opened when the air is injected by the air injection channel module 8.

The exhaust valve 156 may be opened so that the air between the fermentation container 12 and the fermentation tank 112 is exhausted when the beverage within the fermentation container 12 is completely dispensed. The user may take the fermentation container out of the fermentation tank 112 when the beverage is completely dispensed. This is done because safety accidents occur when the inside of the fermentation tank 112 is maintained at a high pressure. The exhaust valve 156 may be controlled to be opened when the beverage within the fermentation container 12 is completely dispensed.

The air controller 15 may further include an air supply valve 159 that restricts the air pumped by the air pump 82 and supplied between the fermentation container 12 and the fermentation tank 112.

The air supply valve 159 may be installed in the air supply channel 154. In more detail, the air supply valve 159 may be installed between the connecting portion 154A of the first main channel 41 and the connecting portion 157A of the exhaust channel 157 in the air supply channel 154.

Hereinafter, the sub channel 91 will be described in detail.

The sub channel 91 may connect the water supply module 5 to the beverage dispenser 6. In more detail, the sub channel 91 may have one end 91A connected to the water supply channel 55B and the other end 91B connected to the beverage dispensing channel 61.

The sub channel 91 may be connected between the water supply pump 52 and the water supply heater 53 with respect to the water supply channel 55B.

Also, the sub channel 91 may be connected to the connecting portion 61A of the second main channel 42 and the beverage dispensing valve 64 with respect to the beverage dispensing channel 61.

The water supplied by the water supply pump 52 and the air pumped by the air pump 82 may be guided to the beverage dispensing channel 61 through the sub channel 91 and then be dispensed to the dispenser 62. Thus, the residual water or the beverage remaining in the beverage dispenser 6 may be removed.

A sub valve 92 opening and closing the sub channel 91 may be installed in the sub channel 91.

The sub valve 92 may be opened when the beverage is dispensed, or the cleaning is performed to open the sub channel 91.

Also, a sub check valve 93 for preventing the beverage of the beverage dispensing channel 61 from flowing back to the water supply module 5 may be installed in the sub channel 91. The sub check valve 93 may be disposed between the sub valve 92 and the beverage dispensing channel 61 with respect to the sub channel 91.

The sub channel 91 may function as a residual water removing channel of the water supply module 5. For example, when the air pump 82 is turned on in the state in which the air supply valve 159, the bypass valve 35, and the ingredient supply valve 310 are closed, the sub valve 92 is opened, the air injected into the air injection channel 81 may pass through the water supply heater 53 to flow to the sub channel 91. Then, the air may pass through the sub valve 92 to flow to the beverage dispensing channel 61 and then be dispensed to the dispenser 62. In this process, the air may be dispensed together with the water supply module 5, more particularly, the residual water remaining the water supply heater 53 and the water supply channel 55B so that residual water is removed.

In addition, the sub channel 91 may serve as a cleaning channel. In more detail, when some of the beverage is dispensed from the dispenser 62 and when a long time remains till a next dispensing operation, the water is allowed to flow through the sub channel 91 to clean the dispenser 62.

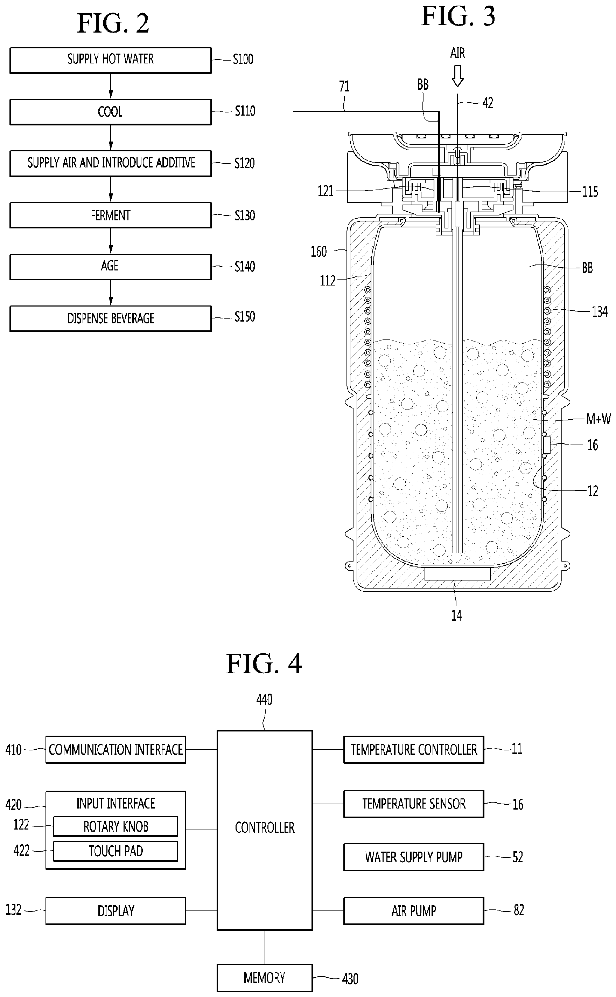

Fig. 2 is a flowchart to explain a beverage making operation of the beverage maker according to an embodiment of the present disclosure.

Although beer is exemplified as a beverage made by the beverage maker in the drawings, a kind of beverage that is capable of being made by the beverage maker according to an embodiment of the present disclosure is not limited to the beer as mentioned above.

Hereinafter, a beverage making operation of the beverage maker according to an embodiment of the present disclosure will be described with reference to Fig. 2 along with Fig. 1.

A user may open the fermentation lid 107 and may insert the fermentation container 12 into the fermentation module 1 to perform a beverage making step. In this case, some ingredients (for example, malt) may be accommodated in the fermentation container 12. The malt may be accommodated in the form of malt oil. In an embodiment in which the fermentation container 12 is not implemented, the user may introduce some ingredients into the fermentation tank 112 of the fermentation module 1.

Thereafter, the user may close the fermentation lid 107 and the fermentation container 12 may be accommodated in the fermentation module 1. In this case, the inside of the fermentation module 1 may be closed by the fermentation lid 107.

In addition, the user may insert ingredient containers C1, C2, C3 into the ingredient accommodating parts 31, 32, 33 before or after the fermentation container 12 is seated.

The user may input a beverage making command through an input interface 420 (see Fig. 4), a remote controller or a mobile terminal. A controller 440 (see Fig. 4) may control the beverage maker at the beverage making step according to the input of the beverage making command.

The beverage making step may include a hot water supply step (S100).

The hot water supply step (S100) may be a liquid malt forming step of forming liquid malt by evenly mixing the malt in the fermentation container 12 with hot water.

At the hot water supply step (S100), the controller 440 may turn on the water supply pump 52 and may introduce water of the water tank 51 into the fermentation container 12. According to an embodiment, to introduce hot water into the fermentation container 12, the water supply module 5 may further include the water supply heater 53. In this case, water discharged from the water tank 51 may pass through the water supply pump 52, and may flow into the water supply heater 53 and may be heated by the water supply heater 53. Water (hot water) heated by the water supply heater 53 may flow into the inside of the fermentation container 12 through the channels 55B, 41, 43, 42 between the water supply module 5 and the fermentation module 1. The hot water flowing into the fermentation container 12 may be mixed with the malt accommodated in the fermentation container 12, and the malt in the fermentation container 12 may be mixed with the water and may be gradually diluted. Since hot water is supplied to the fermentation container 12, the malt accommodated in the fermentation container 12 may be mixed with the hot water rapidly and evenly.

The controller 440 may perform the hot water supply step (S100) until a cumulative amount of water detected by the flow meter 56 included in the water supply module 5 reaches a set amount of water, and, when the cumulative amount of water detected by the flow meter 56 reaches the set amount of water, the controller 440 may complete the hot water supply step (S100).

When the hot water supply step (S100) is completed, the controller 440 may turn off the water supply pump 52 and the water supply heater 53.

In the middle of the hot water supply step (S100), the controller 440 may control the air pump 82 to introduce air into the fermentation container 12. When air is introduced, the malt of the fermentation container 12 may be more smoothly mixed with the hot water.

The controller 440 may introduce water into the fermentation container 12 primarily and then stop, may inject air into the fermentation container 12 and then stop, and finally may introduce hot water into the fermentation container 12 secondarily and then stop. After completing the primary water introduction, the air injection, and the secondary water introduction in sequence, the controller 440 may complete the hot water supply step (S100).

An example of the hot water supply step (S100) may be performing only a hot water supply process of supplying hot water.

Another example of the hot water supply step (S100) may be performing a primary hot water supply process of supplying hot water primarily, an air injection process of injecting air, and a secondary hot water supply process of introducing hot water secondarily in sequence.

The beverage making step may include a fermentation module cooling step (S110).

More specifically, when the hot water supply step (S100) is completed, the fermentation module cooling step (S110) to cool the fermentation tank 112 of the fermentation module 1 or the fermentation container 12 may be performed.

The controller 440 may control the temperature controller 11 included in the fermentation module 1 to cool the fermentation container 12. More specifically, the controller 440 may control the refrigerant cycle device 13 to cool the fermentation container 12. When the refrigerant cycle device 13 is driven, the fermentation container 12 may be gradually cooled, and the mixture (liquid malt) of the malt and the water accommodated in the fermentation container 12 may be cooled. The controller 440 may control the refrigerant cycle device 13 according to a temperature sensed in the temperature sensor 16 installed in the fermentation module 1. For example, the controller 440 may turn off the refrigerant cycle device 13 when the temperature sensed by the temperature sensor 16 reaches a set temperature of the cooling step.

The beverage making step may include an air supply step and an additive introduction step (S120). The step S120 is performed after the fermentation module cooling step S110 is completed.

At the air supply step, the controller 440 may turn on the air pump 82. While the air pump is turned on, air may pass through the channel between the air pump 82 and the fermentation module 1 and may be introduced into the fermentation container 12. The air introduced into the fermentation container 12 may collide with the liquid malt and may help the malt and the hot water be evenly mixed, and the air colliding with the liquid malt may increase dissolved oxygen (DO) of the liquid malt by supplying oxygen to the liquid malt. That is, agitation and aeration may be performed. As the DO of the liquid malt increases, yeast included in an additive introduced into the fermentation container 12 may act more effectively, and thus the beverage may be smoothly fermented.

The controller 440 may turn on the air pump 82 for a set time to supply air to the fermentation container 12, and, when the set time elapses, the controller 440 may turn off the air pump 82 to complete the air supply step.

In addition, the beverage maker may perform the additive introduction step.

At the additive introduction step, ingredients (additive) accommodated in the ingredient supplier 3 may be introduced into the fermentation container 12.

At the additive introduction step, the controller 440 may turn on the water supply pump 52. When the water supply pump 52 is turned on, water in the water tank 51 may pass through the water supply pump 52 and the channels between the water supply module 5 and the ingredient supplier 3, and may flow into the ingredient containers C1, C2, C3 in the ingredient supplier 3. The water flowing into the ingredient containers C1, C2, C3 may be mixed with additives accommodated in the ingredient containers C1, C2, C3, and may flow into the fermentation container 12 along with the additives.

The controller 440 may complete the additive introduction step when a cumulative amount of water detected at the flow meter 56 since the additive introduction step has been initiated reaches a set amount of water. When the additive introduction step is completed, the controller 440 may turn off the water supply pump 52.

According to an embodiment of the present disclosure, the beverage maker may control the cooling step (S110) and the air supply and additive introduction step (S120) to prevent backflow of bubbles generated from the liquid malt at the air supply step to the gas discharge channel 71. This will be described in detail below with reference to Figs. 3 to 12.

When the additive introduction step S120 is completed, the controller 440 may display an ingredient container removal message indicating that the ingredient containers C1, C2, C3 are allowed to be removed on a display 132 (see Fig. 4), and the user may remove the empty ingredient containers from the ingredient supplier 3.

The beverage making step may include a fermentation step (S130). For example, the fermentation step (S130) may include a primary fermentation step and a secondary fermentation step.

At the primary fermentation step, the controller 440 may control the temperature controller 11 to maintain the temperature sensed by the temperature sensor 16 at a primary fermentation target temperature (for example, 21°C).

The controller 440 may periodically open and close the gas discharge valve 73 (or the pressure release valve 76) of the gas discharger 7, and may store pressure detected at the gas pressure sensor 72 included in the gas discharger 7 while the gas discharge valve 73 is being closed in a memory 430 (see Fig. 4). The controller 440 may complete the primary fermentation step when a change in pressure periodically detected at the gas pressure sensor 72 exceeds a primary fermentation set pressure.

After completing the primary fermentation step, the controller 440 may initiate the secondary fermentation step.

At the secondary fermentation step, the controller 440 may control the temperature controller 11 such that the temperature measured at the temperature sensor 16 reaches a secondary fermentation target temperature.

After initiating the secondary fermentation step, the controller 440 may periodically open and close the gas discharge valve 73 of the gas discharger 7, and may store pressure sensed at the gas pressure sensor 72 while the gas discharge valve 73 is being closed in the memory 430. When a change in pressure periodically detected at the gas pressure sensor 72 exceeds a second fermentation set pressure, the controller 440 may determine that the secondary fermentation is completed and may complete the secondary fermentation step.

The beverage making step may include an aging step (S140).

More specifically, when the fermentation step (S130) is completed, the aging step (S140) may be performed.

At the aging step, the controller 440 may wait for an aging time, and may control the temperature controller 11 to maintain the temperature of the beverage between an upper limit value of a set aging temperature and a lower limit value of the set aging temperature for the aging time.

When the aging time elapses, the beverage making step may be completed. However, according to the circumstances, the aging step (S140) may be omitted, and when the fermentation step (S130_ is completed, making of the beverage may be completed.

The controller 440 may display completion of making of the beverage through the display 132.

The controller 440 may control the temperature controller 11 to maintain the temperature of the fermentation tank 112 or the fermentation container 12 between an upper limit value and a lower limit value of a pre-set drinking temperature until a beverage dispensing step (S150), which will be described below, is completed.

The beverage maker according to an embodiment of the present disclosure may further include the beverage dispensing step (S150_ to dispense the beverage after the beverage is made.

At the beverage dispensing step (S150), the user may dispense the beverage by operating the lever 620 of the dispenser 62. When the user opens the dispenser 62, the beverage in the fermentation container 12 may pass through the channel between the fermentation module 1 and the dispenser 62 and may be dispensed to the outside through the dispenser 62.

The user may dispense the beverage through the dispenser 62 at least one time. That is, the beverage dispensing process may be performed at least one time, and the controller 440 may determine whether dispensing of the beverage is completed by using information such as a time for which the dispenser 62 is opened.

The beverage maker may further include a cleaning step of cleaning and sterilizing the inner channels before step S100 or after step S150, although it is not illustrated. In addition, the cleaning step may be performed by a user input in the middle of the beverage making operation, and in this case, the cleaning step may be performed when the main valve 40 is closed and an additive is not accommodated in the ingredient supplier 3 as in the fermentation step.

Hereinafter, the control operation of the beverage maker for the cooling step (S110) and the air supply and additive introduction step (S120) will be described in detail with reference to Figs. 3 to 12.

Fig. 3 is a view to explain a bubble backflow phenomenon generated in a related-art beverage maker.

Referring to FIG. 3, at the air supply step described above in Fig. 2, the controller 440 (see

Fig. 4) may turn on the air pump 82 and supply air to the fermentation container 12. A part of the air supplied to the fermentation container 12 may be included in liquid malt (M+W), and the rest may be discharged to the outside through the gas discharge channel 71.

In this case, the air discharged to the outside may be discharged to the upper portion of the liquid malt (M+W) while being included in bubbles BB, and may be discharged to the outside through the gas discharge channel 71 as the bubbles BB burst.

In a related-art method, the air supply step is performed while the refrigerant cycle device 13 is being driven according to the fermentation module cooling step (S110). While the fermentation module cooling step (S110) is being performed, a temperature of the evaporator 134 (for example, 0°C) wound along the outer surface of the fermentation tank 112 may be greatly lower than a set temperature of the cooling step (for example, 30°C), and temperatures of a surface (inner surface) of the fermentation tank 112 and a surface of the fermentation container 12 corresponding to the evaporator 134 may also be greatly lower than the set temperature of the cooling step.

It is common that viscosity of liquid increases as temperature decreases. Accordingly, viscosity of the liquid malt (M+W) adjacent to the evaporator 134 may increase, and, as the viscosity increases, the possibility that the bubbles BB burst may be reduced.

Since the air pump 82 continuously supplies air at the air supply step, the bubbles BB in the fermentation container 12 may be accumulated and some of the accumulated bubbles BB may flow back along the opened gas discharge channel 71. As a result, the liquid malt in the bubbles BB flowing back to the gas discharge channel 71 remains on the gas discharge channel 71, and thus hygiene of the gas discharge channel 71 may deteriorate and the beverage may not be smoothly made due to clogging of the gas discharge channel 71 or reduction in an inner diameter, and also, the beverage maker may be damaged or may be out of order.

A control operation of the beverage maker to solve the above-described problems will be described hereinbelow with reference to Figs. 4 to 12.

Fig. 4 is a schematic block diagram illustrating a control configuration of the beverage maker according to an embodiment of the present disclosure.

Referring to Fig. 4, the beverage maker may include a communication interface 410, an input interface 420, a memory 430, and a controller 440. The control components shown in Fig. 4 are not essential for implementing the beverage maker, and the beverage maker may include more components or fewer components according to an embodiment.

The beverage maker may include the communication interface 410 to communicate with a terminal (a smartphone, a tablet PC, or the like) or a server. For example, the controller 440 may receive a request for execution of the beverage making function from a terminal of a user, or may receive recipe information through the communication interface 410. In addition, the controller 440 may transmit a variety of information regarding operations of the beverage maker, a making state of the beverage, or a storage state to the terminal or the server through the communication interface 410.

The communication interface 410 may include a module supporting at least one of already-known various wired or wireless communication methods. For example, the communication interface 410 may include a module of short-range wireless communication such as Blue-tooth, near field communication (NFC), or the like, or a wireless Internet module such as a wireless local area network (WLAN) module or the like.

The input interface 420 may be provided to receive various requests or commands from the user. For example, the input interface 120 may include a rotary knob 122, a touch pad 422 (or touch screen), other buttons or a microphone, or the like. The controller 440 may receive a request for execution of the beverage making function, recipe information, control commands regarding various operations of the beverage maker, or the like through the input interface 420.

A display 132 may output a variety of information related to an operation or a state of the beverage maker, and a variety of information related to a beverage which is being made or stored in the beverage maker.

The display 132 may be implemented by using a liquid crystal display (LCD), a light emitting diode (LED), an organic LED (OLED) display, or the like. In the following description, it is assumed that the display 132 is formed in a circular shape, but the shape of the display 132 may be freely changed.

For example, the display 132 may output the information in the form of graphics or text. According to an embodiment, the beverage maker may further include a sound output interface to output the information in the form of a voice, and the controller 440 may output the information through various combinations of graphics, a text, a voice by using the display 132 and the sound output interface.

The memory 430 may store a variety of information or data related to operations of the beverage maker. For example, the memory 430 may store predetermined recipe information regarding beverages to be made, various setting values, various program data for operations of the beverage maker, or the like. In addition, the memory 430 may store various graphic data related to screens displayed through the display 132.

The controller 440 may control overall operations of the beverage maker. Herein, the controller 440 may refer to at least one controller. The at least one controller may be implemented by using hardware such as a CPU, an application processor, a micro-computer (or mi-com), an integrated circuit, an application specific integrated circuit (ASIC), or the like.

For example, the controller 440 may control driving of the temperature controller 11, the water supply pump 52, and the air pump 82 which are included in the beverage maker. In addition, the controller 440 may control to open/close valves provided in the channels in relation to control of the driving of the above-described components.

In addition, the controller 440 may sense a temperature of the fermentation tank 112 or the fermentation container 12 by using the temperature sensor 16, and may control driving of the above-described components 11, 52, 82 based on a result of sensing.

Fig. 5 is a flowchart to explain a beverage making operation of the beverage maker according to an embodiment of the present disclosure.

Referring to Fig. 5, the beverage maker may turn on the refrigerant cycle device 13 included in the temperature controller 11 to cool a mixture of malt and hot water (liquid malt).

A temperature of the liquid malt may be about 50°C to 70 °C. On the other hand, yeast included in an additive to be added to the liquid malt may be activated (propagated or grown) to the maximum at about 28 °C to 35 °C. In addition, at the fermentation step performed after the additive is introduced, the temperature of the liquid malt may be set to 21 °C or 12 °C. Accordingly, the beverage maker may perform the cooling step (S110) to reduce the temperature of the liquid malt.

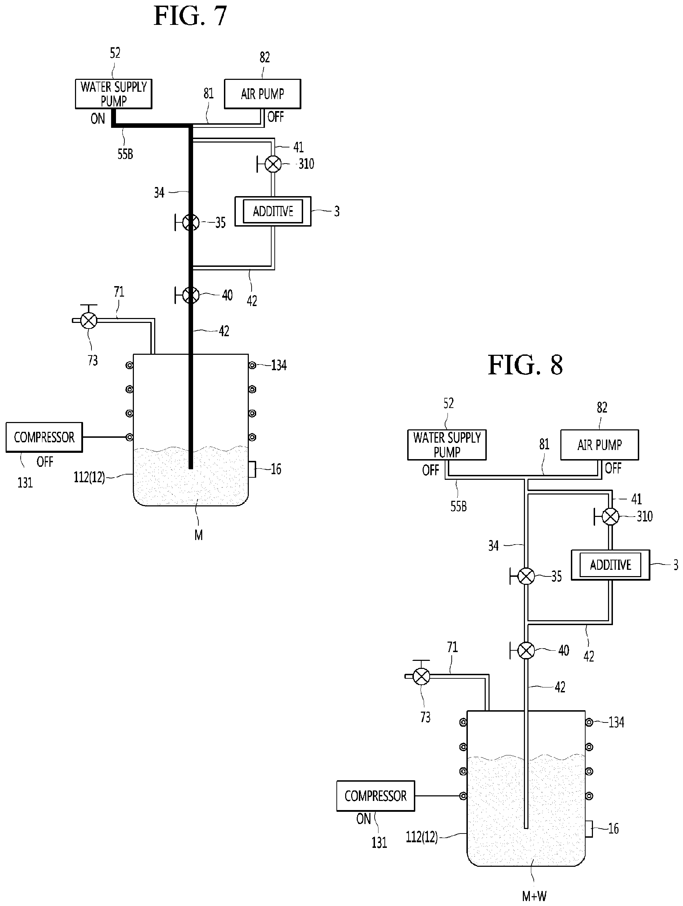

Accordingly, the controller 440 may control the temperature controller 11 to cool the liquid malt accommodated in the fermentation tank 112 (or the fermentation container 12). Specifically, the controller 440 may drive the compressor 131 (see Fig. 7) of the refrigerant cycle device 13 included in the temperature controller 11. As the compressor 131 is driven, a refrigerant may be supplied to the evaporator 134 wound along the outer surface of the fermentation tank 112. The fermentation tank 112 may be cooled by the refrigerant supplied to the evaporator 134. As the fermentation tank 112 is cooled, the fermentation container 12 accommodated in the fermentation tank 112 and the liquid malt may also be cooled.

The beverage maker may sense a temperature of the fermentation tank 112 or the fermentation container 12 by using the temperature sensor 16 while performing the cooling step (S110) according to driving of the coolant cycle device 13 (S210).

The controller 440 may periodically sense the temperature by using the temperature sensor 16 provided on the outer surface of the fermentation tank 112, while performing the cooling step (S110).

The evaporator 134 is implemented to be wound along the outer surface of the fermentation tank 112, such that a temperature of a surface of a portion of the fermentation tank 112 adjacent to the evaporator 134 is cooled to a temperature below zero or close to 0°C. Therefore, there may be a great difference from a temperature of the liquid malt in the fermentation tank. Accordingly, the temperature sensor 16 may be disposed at a position spaced apart from the evaporator 134 as shown in Fig. 1, thereby being able to sense the temperature of the liquid malt more exactly.

When the sensed temperature does not reach a first reference temperature (NO in step S220), that is, when the sensed temperature is higher than the first reference temperature, the beverage maker may detect the temperature by using the temperature sensor 16 until the sensed temperature reaches the first reference temperature (or is less than the first reference temperature).

When the sensed temperature reaches the first reference temperature or is less than the first reference temperature (YES in step S220), the beverage maker may introduce an additive accommodated in the ingredient supplier 3 into the fermentation tank 112 or the fermentation container 12 (S230).

When the temperature sensed by the temperature sensor 16 reaches the first reference temperature, or is lower than the first reference temperature in the middle of the cooling step (S110), the controller 440 may perform the additive introduction step described in Fig. 2. In this case, the cooling step (110) may be continuously performed.

The first reference temperature may be set to a second reference temperature (for example, about 28°C to 35°C) at which yeast is activated to the maximum, or to a temperature higher than the second reference temperature by about 1°C to 3°C. That is, the additive introduction step is performed in the middle of the cooling step (S110), such that the total time required to make the beverage can be reduced.

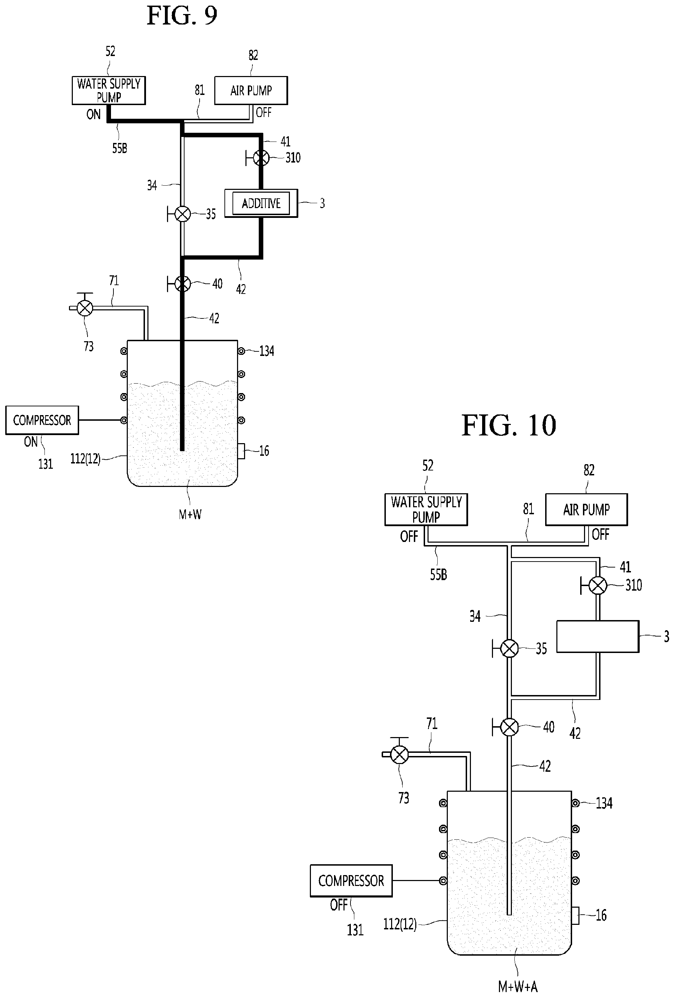

A control operation of the controller 440 at the additive introduction step will be described in detail below with reference to Fig. 9.

The beverage maker may sense the temperature of the fermentation tank 112 or the fermentation container 12 by using the temperature sensor 16 (S240).

Since the cooling step (S110) is continuously performed in the middle of the additive introduction step or after the additive introduction step, the controller 440 may periodically sense the temperature by using the temperature sensor 16.

When the sensed temperature does not reach the second reference temperature (NO in step S250), that is, when the sensed temperature is higher than the second reference temperature, the beverage maker may sense the temperature by using the temperature sensor 16 until the sensed temperature reaches the second reference temperature (or is less than the second reference temperature).

When the sensed temperature reaches the second reference temperature or is less than the second reference temperature (YES in step S250), the beverage maker may finish the cooling step (S110) by turning off the temperature controller 11 (or refrigerant cycle device 13) (S260).

For example, the second reference temperature may correspond to a temperature at which yeast is activated to the maximum (about 28°C to 35°C).

When the temperature sensed by the temperature sensor 16 reaches the second reference temperature, the controller 440 may finish the cooling step (S110) by turning off driving of the compressor 131 included in the refrigerant cycle device 13.

After turning off the refrigerant cycle device 13, the beverage maker may perform the air supply step of supplying air to the fermentation tank 112 or the fermentation container 12 (S270).

As the refrigerant cycle device 13 is turned off, supply of the refrigerant to the evaporator 134 may be stopped. Accordingly, the temperature of the surface of the fermentation tank 112 adjacent to the evaporator 134 may gradually increase to the temperature of the liquid malt.

After turning off the refrigerant cycle device 13, the controller 440 may control the air pump 82 to supply air to the liquid malt in the fermentation tank 112 or the fermentation container 12.

A part of the air supplied to the liquid malt may dissolve in the liquid malt, and the rest may be discharged to the outside through the gas discharge channel 71. In this case, the air discharged to the outside may be discharged to the upper portion of the liquid malt while being included in bubbles, and may be discharged to the outside through the gas discharge channel 71 as the bubbles burst.

Compared to the related-art beverage maker described in Fig. 3, the beverage maker according to an embodiment of the present disclosure may perform the air supply step after the cooling step (S120) is completed. That is, since the temperature of the portion of the fermentation tank adjacent to the evaporator 134 gradually increases to the temperature of the liquid malt, viscosity of the liquid malt adjacent to the fermentation tank 112 may be reduced. Accordingly, the bubbles smoothly burst and thus a backflow phenomenon caused by accumulation of bubbles can be effectively prevented.

Hereinafter, operations of the beverage maker according to an embodiment of the present disclosure will be described in detail with reference to Figs. 6 to 11.

Fig. 6 is a graph illustrating a change in temperature sensed by the temperature sensor when the beverage maker is operated according to the embodiment shown in Fig. 5.

Referring to Fig. 6, when hot water is supplied to the fermentation tank 112 or the fermentation container 12 according to step S100 of Fig. 2, a temperature sensed by the temperature sensor 16 may be a first temperature TEMP1. For example, the first temperature TEMP1 may be about 50°C to 70 °C.

When the hot water supply step (S100) is completed at a first time T1, the cooling step (S110) may be performed. As the cooling step (S110) is performed, the temperature sensed by the temperature sensor 16 may be reduced by the lapse of time.

At a second time T2 at which the temperature sensed by the temperature sensor 16 is a second temperature TEMP2, the beverage maker may perform the above-described additive introduction step at step S120 of Fig. 2 and step S230 of Fig. 5. That is, the second temperature TEMP2 may correspond to the first reference temperature of Fig. 5.

Since the beverage maker continuously performs the cooling step regardless of the additive introduction step, the temperature sensed by the temperature sensor 16 may be continuously reduced.

At a third time T3 at which the temperature sensed by the temperature sensor 16 is a third temperature TEMP3, the beverage maker may finish the cooling step, and may perform the above-described air supply step at step S120 of Fig. 2 and at step S270 of Fig. 5. That is, the third temperature TEMP3 may correspond to the second reference temperature of Fig. 5.

After the air supply step is performed for a set time, the beverage maker may control the temperature controller 11 to cool to reduce the temperature in the fermentation tank to a set temperature of the fermentation step although this operation is not illustrated. While performing the fermentation step, the beverage maker may control the temperature controller 11 to maintain the temperature in the fermentation tank at the set temperature of the fermentation step.

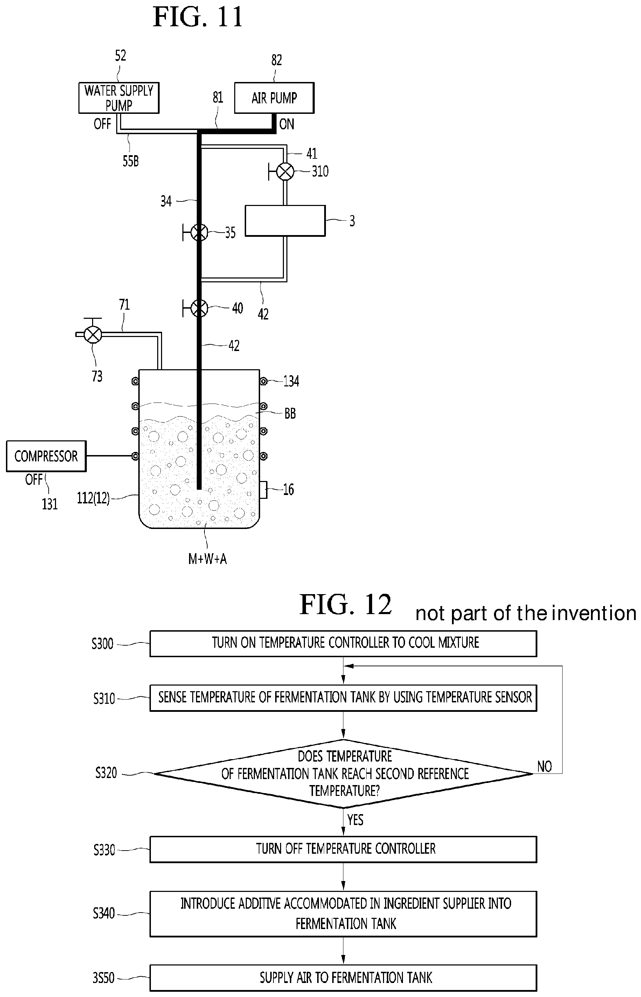

Fig. 7 is a view illustrating a beverage making operation performed by the beverage maker before the first time in the graph shown in Fig. 6. Fig. 8 is a view illustrating a beverage making operation performed by the beverage maker between the first time and the second time in the graph shown in Fig. 6. Fig. 9 is a view illustrating a beverage making operation performed by the beverage maker at the second time in the graph shown in Fig. 6. Fig. 10 is a view illustrating a beverage making operation performed by the beverage maker at the third time in the graph shown in Fig. 6. Fig. 11 is a view illustrating a beverage making operation performed by the beverage maker after the third time in the graph shown in Fig. 6.

In Figs. 7 to 11, the configuration of the beverage maker shown in Fig. 1 is simplified for convenience of explanation.

Referring to Figs. 6 and 7, the hot water supply step (S100) of Fig. 2 may be performed before the first time T1.

At the hot water supply step (S100), the controller 440 may turn on the water supply pump 52. The controller 440 may turn on the water supply heater 53 although it is not illustrated.

Hot water supplied by the water supply pump 52 may be supplied to the fermentation tank 112 or the fermentation container 12 through the water supply channel 55B connected with the water supply pump 52, the bypass channel 34 connected with the water supply channel 55B, and the second main channel 42 connected between the bypass channel 34 and the fermentation module 1. To achieve this, the controller 440 may open the bypass valve 35 and the main valve 40, and may close the ingredient supply valve 310. In Figs. 7 to 11, the controller 440 may keep the gas discharge valve 73 open.

The hot water supplied to the fermentation tank 112 or the fermentation container 12 may be mixed with malt (M), thereby forming liquid malt (M+W).

Referring to Fig. 8, the hot water supply step (S100) may be completed and the cooling step (S110) may be performed at the first time T1 of Fig. 6.

The controller 440 may turn off the water supply pump 52 as the hot water supply step (S100) is completed. According to an embodiment, the controller 440 may close the bypass valve 35 and the main valve 40.

The controller 440 may turn on the compressor 131 included in the refrigerant cycle device 14 to perform the cooling step (S110). As the compressor 131 is turned on, a refrigerant may be supplied to the evaporator 134 and a temperature of the liquid malt (M+W) may be gradually reduced.

The controller 440 may periodically sense a temperature by using the temperature sensor 16.

Referring to Fig. 9, at the second time T2 of Fig. 6, that is, when the temperature sensed by the temperature sensor 16 reaches the second temperature TEMP2 (=first reference temperature), the beverage maker may perform the additive introduction step.

The controller 440 may open the main valve 40 to introduce an additive accommodated in the ingredient supplier 3 into the liquid malt (M+W). In addition, the controller 440 may turn on the water supply pump 52 to supply water to the ingredient supplier 3 to effectively introduce the additive in a powdery form or a liquid form into the liquid malt (M+W).

The water supplied by the water supply pump 52 may be supplied to the ingredient supplier 3 through the water supply channel 55B and the first main channel 41 connecting the water supply channel 55B and the ingredient supplier 3. To achieve this, the controller 440 may close the bypass valve 35 and may open the ingredient supply valve 310.

The water supplied to the ingredient supplier 3 may be introduced into the fermentation tank 112 or the fermentation container 12 along with the additive through the second main channel 42.

Since the cooling step (S110) is performed regardless of the additive introduction step, the controller 440 may keep the compressor 131 turned on and the temperature of the liquid malt (M+W) may be continuously reduced.

Referring to Fig. 10, as the additive accommodated in the ingredient supplier 3 is introduced into the fermentation tank 112 or the fermentation container 12, a mixture (M+W+A) of the liquid malt (M+W) and the additive (A) may exist in the fermentation tank 112 or the fermentation container 12.

After the additive is introduced, the controller 440 may turn off the water supply pump 52 to stop supply of water. According to an embodiment, the controller 440 may close the ingredient supply valve 310 and the main valve 40.

At the third time T3 of Fig. 6, that is, when the temperature sensed by the temperature sensor 16 reaches the third temperature TEMP3 (=second reference temperature), the beverage maker may finish the cooling step (S110). That is, the controller 440 may finish cooling of the mixture (M+W+A) by turning off the compressor 131.

Referring to FIG. 11, after the compressor 131 is turned off, the beverage maker may perform the air supply step.

The controller 440 may turn on the air pump 82. The air pumped by the air pump 82 may be supplied to the mixture (M+W+A) in the fermentation tank 112 or the fermentation container 12 through the air injection channel 81 connected with the air pump 82, the bypass channel 34 connected with the air injection channel 81, and the second main channel 42 between the bypass channel 34 and the fermentation module 1. To achieve this, the controller 440 may open the bypass valve 35 and the main valve 40, and may close the ingredient supply valve 310.

A part of the air supplied to the mixture (M+W+A) may dissolve in the mixture (M+W+A). In particular, a part of oxygen included in the air dissolves in the mixture (M+W+A), such that DO of the mixture may increase. As the DA increases, fermentation of the mixture by yeast introduced in Fig. 9 can be more effectively performed.

The rest of the air supplied to the mixture (M+W+A) may be discharged to the outside of the mixture (M+W+A), and may be discharged to the outside of the beverage maker through the gas discharge channel 71. As described above, the air discharged to the outside may be discharged to the upper portion of the mixture (M+W+A) while being included in bubbles BB, and may be discharged to the outside through the gas discharge channel 71 as the bubbles BB burst.

Since the air supply step is performed after the cooling step (S110) is finished unlike in Fig. 3, the temperature of the surface of the fermentation tank adjacent to the evaporator 134 may be higher than the temperature in Fig. 3. Accordingly, since viscosity of the mixture (M+W+A) adjacent to the surface of the fermentation tank is relatively low, the bubbles BB may burst more smoothly. As a result, since an amount of bubbles BB accumulated on the mixture (M+W+A) is reduced, the bubbles BB may not flow back through the gas discharge channel 71.

According to an embodiment, the air pumped by the air pump 82 may be supplied to the fermentation tank 112 or the fermentation container 12 through the air injection channel 81, the first main channel 41 between the air injection channel 81 and the ingredient supplier 3, and the second main channel 42. Accordingly, the water or additive remaining in the ingredient supplier 3 may be discharged by the air, and may be introduced into the fermentation tank 112 or the fermentation container 12.

That is, according to an embodiment of the present disclosure, after completing the cooling step of the liquid malt, that is, after finishing driving of the refrigerant cycle device 13, the beverage maker may supply air to the liquid malt, such that a problem of backflow of bubbles to the gas discharge channel 71, caused by accumulation of bubbles generated when air is supplied, can be solved.

Fig. 12 is a flowchart to explain a beverage making operation of the beverage maker which is not part of the present invention.

Since steps S300 and S310 of FIG. 12 are substantially the same as steps S200 and S210 of Fig. 5, a detailed description thereof is omitted.

When the temperature sensed by the temperature sensor 16 reaches the second reference temperature (YES in step S320), the beverage maker may turn off the temperature controller 11 and may finish the cooling step (S330).

After turning off the temperature controller 11, the beverage maker may introduce the additive accommodated in the ingredient supplier 3 into the fermentation tank 112 or the fermentation container 12 (S340).

That is, unlike in the embodiment of Fig. 5, the beverage maker may not perform the additive introduction step before the temperature sensed by the temperature sensor 16 reaches the second reference temperature.

Specifically, when the temperature sensed by the temperature sensor 16 reaches the second reference temperature or is less than the second reference temperature, the controller 440 may turn off the compressor 131 of the refrigerant cycle device 13.

In addition, the controller 440 may turn on the water supply pump 52 and may open the ingredient supply valve 310 and the main valve 40, thereby supplying water to the ingredient supplier 3. The water supplied to the ingredient supplier 3 may be introduced into the fermentation tank 112 or the fermentation container 12 along with the additive accommodated in the ingredient supplier 3.

After the additive introduction step is performed, the beverage maker may perform the air supply step to supply air to the fermentation tank 112 or the fermentation container 12 (S350).

In the same way as in Fig. 5, the beverage maker can solve the problem of backflow of bubbles to the gas discharge channel 71 by performing the air supply step after the cooling step (S110) is finished.

## Claims

1. A beverage maker comprising:
a fermentation tank (112) having a space formed therein to make a beverage;
a temperature controller (11) configured to control a temperature of the fermentation tank (112);
an air pump (82) configured to supply air to the fermentation tank (112);
a gas discharge channel (71) connected with the fermentation tank (112) and configured to discharge a part of the air supplied to the fermentation tank (112);
a temperature sensor (16) configured to sense the temperature of the fermentation tank (112);
a controller (440) configured to control the temperature controller (11) to cool the fermentation tank (112) accommodating a mixture including ingredients of the beverage while making the beverage, to sense the temperature of the fermentation tank (112) by using the temperature sensor (16), and to control the air pump (82) to supply air to the fermentation tank (112),
an ingredient supplier (3) configured to accommodate an additive to be introduced into the fermentation tank (112) while making the beverage, and
a water supply pump (52) configured to supply water,
wherein the controller (440) is additionally configured to control:
- the additive to be introduced into the fermentation tank (112) before the air is supplied to the fermentation tank (112),
- the water supply pump (52) to supply water to the ingredient supplier (3) to introduce the additive accommodated in the ingredient supplier (3) into the fermentation tank (112),
- the water supply pump (52) to introduce the additive into the fermentation tank (112) when the sensed temperature is less than or equal to a first reference temperature,
- to terminate cooling of the fermentation tank (112) when the sensed temperature is less than or equal to a second reference temperature which is lower than the first reference temperature, and
- to supply air to the fermentation tank (112) after terminating cooling of the fermentation tank (112).

2. The beverage maker of claim 1, further comprising:
a first channel (41) disposed between the water supply pump (52) and the ingredient supplier (3);
an ingredient supply valve (310) disposed in the first channel (41);
a second channel (43) connected with the water supply pump (52) and the air pump (82);
a bypass valve (35) disposed in the second channel (43);
a third channel (42) configured to connect the second channel (43) and the ingredient supplier (3) to the fermentation tank (112); and
a main valve (40) disposed in the third channel (42).

3. The beverage maker of claim 2, wherein the controller (400) is configured to open the ingredient supply valve (310) and the main valve (40) and to close the bypass valve (35) to introduce the additive accommodated in the ingredient supplier (3) into the fermentation tank (112).

4. The beverage maker of claim 2, wherein the controller (400) is configured to open the bypass valve (35) and the main valve (40) and to close the ingredient supply valve (310) to supply air to the fermentation tank (112).

5. The beverage maker of claim 1, further comprising a refrigerant cycle device (13) comprising:
an evaporator (134) surrounding some regions of an outer surface of the fermentation tank (112); and
a compressor (131) configured to supply a refrigerant to the evaporator (134).

6. The beverage maker of claim 5, wherein the temperature sensor (16) is disposed on a region of the outer surface of the fermentation tank (112) that is spaced apart from the evaporator (134).

7. A control method of a beverage maker, the method comprising:
controlling, by a controller (440) of the beverage maker, a temperature controller (11) of the beverage maker to cool a fermentation tank (112) accommodating a mixture including ingredients of a beverage;
sensing (S210) a temperature of the fermentation tank (112) by using a temperature sensor (16);
introducing (S230) an additive accommodated in an ingredient supplier (3) of the beverage maker into the fermentation tank (112);
when the sensed temperature is less than or equal to a reference temperature (S250), terminating (S260) cooling of the fermentation tank (112); and
supplying (S270) air to the fermentation tank (112) by driving an air pump (82) of the beverage maker,
wherein introducing (S230) the additive into the fermentation tank (112) is performed before supplying (S270) the air to the fermentation tank (112),
wherein introducing (S230) the additive into the fermentation tank (112) comprises controlling a water supply pump (52) included in the beverage maker to supply water to the ingredient supplier (3),
wherein introducing (S230) the additive into the fermentation tank (112) is performed when (S220) the temperature sensed by the temperature sensor (16) is less than or equal to a first reference temperature, and
wherein terminating (S260) cooling of the fermentation tank (112) is performed when (S250) the sensed temperature is less than or equal to a second reference temperature which is lower than the first reference temperature.

## Patentansprüche

1. Getränkezubereitungsvorrichtung, die Folgendes umfasst:
einen Fermentationsbehälter (112), in dem ein Raum gebildet ist, um ein Getränk zuzubereiten;
eine Temperatursteuereinheit (11), die konfiguriert ist, eine Temperatur des Fermentationsbehälters (112) zu steuern;
eine Luftpumpe (82), die konfiguriert ist, dem Fermentationsbehälter (112) Luft zuzuführen;
einen Gasauslasskanal (71), der mit dem Fermentationsbehälter (112) verbunden ist und konfiguriert ist, einen Teil der Luft, der dem Fermentationsbehälter (112) zugeführt worden ist, auszulassen;
einen Temperatursensor (16), der konfiguriert ist, die Temperatur des Fermentationsbehälters (112) zu ermitteln;
eine Steuereinheit (440), die konfiguriert ist, die Temperatursteuereinheit (11) zu steuern, den Fermentationsbehälter (112), der eine Mischung aufnimmt, die Zutaten des Getränks enthält, während des Zubereiten des Getränks zu kühlen, die Temperatur des Fermentationsbehälters (112) durch Verwenden des Temperatursensors (16) zu ermitteln und die Luftpumpe (82) zu steuern, dem Fermentationsbehälter (112) Luft zuzuführen,
eine Zutatenzuführvorrichtung (3), die konfiguriert ist, einen Zusatzstoff aufzunehmen, der während des Zubereitens des Getränks in den Fermentationsbehälter (112) eingeleitet werden soll, und
eine Wasserzuführpumpe (52), die konfiguriert ist, Wasser zuzuführen,
wobei die Steuereinheit (440) zusätzlich konfiguriert ist, Folgendes zu steuern:
- den Zusatzstoff, der in den Fermentationsbehälter (112) eingeleitet werden soll, bevor dem Fermentationsbehälter (112) Luft zugeführt wird,
- die Wasserzuführpumpe (52), um der Zutatenzuführvorrichtung (3) Wasser zuzuführen, um den Zusatzstoff, der in der Zutatenzuführvorrichtung (3) aufgenommen ist, in den Fermentationsbehälter (112) einzuleiten,
- die Wasserzuführpumpe (52), um den Zusatzstoff in den Fermentationsbehälter (112) einzuleiten, wenn die ermittelte Temperatur niedriger oder gleich einer ersten Referenztemperatur ist,
- das Kühlen des Fermentationsbehälters (112) zu beenden, wenn die ermittelte Temperatur niedriger oder gleich einer zweiten Referenztemperatur ist, die niedriger ist als die erste Referenztemperatur, und
- dem Fermentationsbehälter (112) nach dem Beenden des Kühlens der Fermentationsbehälters (112) Luft zuzuführen.

2. Getränkezubereitungsvorrichtung nach Anspruch 1, die ferner Folgendes umfasst:
einen ersten Kanal (41), der zwischen der Wasserzuführpumpe (52) und der Zutatenzuführvorrichtung (3) angeordnet ist;
ein Zutatenzuführventil (310), das in dem ersten Kanal (41) angeordnet ist;
einen zweiten Kanal (43), der mit der Wasserzuführpumpe (52) und der Luftpumpe (82) verbunden ist;
ein Umgehungsventil (35), das in dem zweiten Kanal (43) angeordnet ist;
einen dritten Kanal (42), der konfiguriert ist, den zweiten Kanal (43) und die Zutatenzuführvorrichtung (3) mit dem Fermentationsbehälter (112) zu verbinden; und
ein Hauptventil (40), das in dem dritten Kanal (42) angeordnet ist.

3. Getränkezubereitungsvorrichtung nach Anspruch 2, wobei die Steuereinheit (400) konfiguriert ist, das Zutatenzuführventil (310) und das Hauptventil (40) zu öffnen und das Umgehungsventil (35) zu schließen, um den Zusatzstoff, der in der Zutatenzuführvorrichtung (3) aufgenommen ist, in den Fermentationsbehälter (112) einzuleiten.

4. Getränkezubereitungsvorrichtung nach Anspruch 2, wobei die Steuereinheit (400) konfiguriert ist, das Zutatenzuführventil (310) und das Hauptventil (40) zu öffnen und das Umgehungsventil (35) zu schließen, um dem Fermentationsbehälter (112) Luft zuzuführen.

5. Getränkezubereitungsvorrichtung nach Anspruch 1, die ferner eine Kältemittelkreislaufvorrichtung (13) umfasst, die Folgendes umfasst:
einen Verdampfer (134), der einige Bereiche einer Außenfläche des Fermentationsbehälters (112) umgibt; und
einen Verdichter (131), der konfiguriert ist, dem Verdampfer (134) ein Kältemittel zuzuführen.

6. Getränkezubereitungsvorrichtung nach Anspruch 5, wobei der Temperatursensor (16) an einem Bereich der Außenfläche des Fermentationsbehälters (112) angeordnet ist, der von dem Verdampfer (134) beabstandet ist.

7. Verfahren zum Steuern einer Getränkezubereitungsvorrichtung, wobei das Verfahren Folgendes umfasst:
Steuern durch eine Steuereinheit (440) der Getränkezubereitungsvorrichtung einer Temperatursteuereinheit (11) der Getränkezubereitungsvorrichtung, einen Fermentationsbehälter (112) zu kühlen, der eine Mischung aufnimmt, die Zutaten eines Getränks beinhaltet;
Ermitteln (S210) einer Temperatur des Fermentationsbehälters (112) durch Verwenden eines Temperatursensors (16);
Einleiten (S230) eines Zusatzstoffs, der in einer Zutatenzuführvorrichtung (3) der Getränkezubereitungsvorrichtung aufgenommen ist, in den Fermentationsbehälter (112);
dann, wenn die ermittelte Temperatur kleiner oder gleich einer Referenztemperatur (S250) ist, Beenden (S260) des Kühlens des Fermentationsbehälters (112); und
Zuführen (S270) von Luft in den Fermentationsbehälter (112) durch Ansteuern einer Luftpumpe (82) der Getränkezubereitungsvorrichtung,
wobei das Einleiten (S230) des Zusatzstoffs in den Fermentationsbehälter (112) vor dem Zuführen (S270) von Luft in den Fermentationsbehälter (112) durchgeführt wird,
wobei das Einleiten (S230) des Zusatzstoffs in den Fermentationsbehälter (112) das Steuern einer Wasserzuführpumpe (52) umfasst, die in der Getränkezubereitungsvorrichtung enthalten ist, um der Zutatenzuführvorrichtung (3) Wasser zuzuführen,
wobei das Einleiten (S230) des Zusatzstoffs in den Fermentationsbehälter (112) durchgeführt wird, wenn (S220) die Temperatur, die von dem Temperatursensor (16) ermittelt wird, niedriger oder gleich einer ersten Referenztemperatur ist, und
wobei das Beenden (S260) des Kühlens des Fermentationsbehälters (112) durchgeführt wird, wenn (S250) die ermittelte Temperatur niedriger oder gleich einer zweiten Referenztemperatur ist, die niedriger ist als die erste Referenztemperatur.

## Revendications

1. Dispositif de préparation de boisson comportant :
un réservoir de fermentation (112) ayant un espace formé dans celui-ci pour préparer une boisson ;
une commande de température (11) configurée pour commander une température du réservoir de fermentation (112) ;
une pompe à air (82) configurée pour fournir de l'air au réservoir de fermentation (112) ;
un canal d'évacuation de gaz (71) relié au réservoir de fermentation (112) et configuré pour évacuer une partie de l'air fourni au réservoir de fermentation (112) ;
un capteur de température (16) configuré pour détecter la température du réservoir de fermentation (112) ;
une commande (440) configurée pour commander à la commande de température (11) de refroidir le réservoir de fermentation (112) recevant un mélange incluant des ingrédients de la boisson tout en préparant la boisson, pour détecter la température du réservoir de fermentation (112) en utilisant le capteur de température (16), et pour commander à la pompe à air (82) de fournir de l'air au réservoir de fermentation (112),
un dispositif d'alimentation en ingrédients (3) configuré pour recevoir un additif à introduire dans le réservoir de fermentation (112) tout en préparant la boisson, et
une pompe d'alimentation en eau (52) configurée pour fournir de l'eau,
dans lequel la commande (440) est de plus configurée pour commander :
- d'introduire l'additif dans le réservoir de fermentation (112) avant la fourniture de l'air au réservoir de fermentation (112),
- à la pompe d'alimentation en eau (52) de fournir de l'eau au dispositif d'alimentation en ingrédients (3) afin d'introduire l'additif reçu dans le dispositif d'alimentation en ingrédients (3) dans le réservoir de fermentation (112),
- à la pompe d'alimentation en eau (52) d'introduire l'additif dans le réservoir de fermentation (112) lorsque la température détectée est inférieure ou égale à une première température de référence,
- de mettre fin au refroidissement du réservoir de fermentation (112) lorsque la température détectée est inférieure ou égale à une seconde température de référence qui est inférieure à la première température de référence, et
- de fournir de l'air au réservoir de fermentation (112) après la fin du refroidissement du réservoir de fermentation (112).

2. Dispositif de préparation de boisson selon la revendication 1, comportant en outre :
un premier canal (41) disposé entre la pompe d'alimentation en eau (52) et le dispositif d'alimentation en ingrédients (3) ;
une vanne d'alimentation en ingrédients (310) disposée dans le premier canal (41) ;
un deuxième canal (43) relié à la pompe d'alimentation en eau (52) et à la pompe à air (82) ;
une vanne de dérivation (35) disposée dans le deuxième canal (43) ;
un troisième canal (42) configuré pour relier le deuxième canal (43) et le dispositif d'alimentation en ingrédients (3) au réservoir de fermentation (112) ; et
une vanne principale (40) disposée dans le troisième canal (42).

3. Dispositif de préparation de boisson selon la revendication 2, dans lequel la commande (400) est configurée pour ouvrir la vanne d'alimentation en ingrédients (310) et la vanne principale (40) et pour fermer la vanne de dérivation (35) afin d'introduire l'additif reçu dans le dispositif d'alimentation en ingrédients (3) dans le réservoir de fermentation (112).

4. Dispositif de préparation de boisson selon la revendication 2, dans lequel la commande (400) est configurée pour ouvrir la vanne de dérivation (35) et la vanne principale (40) et pour fermer la vanne d'alimentation en ingrédients (310) pour fournir de l'air au réservoir de fermentation (112).

5. Dispositif de préparation de boisson selon la revendication 1, comportant en outre un dispositif à cycle de fluide de frigorigène (13) comportant :
un évaporateur (134) entourant certaines zones d'une surface extérieure du réservoir de fermentation (112) ; et
un compresseur (131) configuré pour fournir un fluide frigorigène à l'évaporateur (134).

6. Dispositif de préparation de boisson selon la revendication 5, dans lequel le capteur de température (16) est disposé sur une zone de la surface extérieure du réservoir de fermentation (112) qui est espacée de l'évaporateur (134).

7. Procédé de commande d'un dispositif de préparation de boisson, le procédé comportant de :
commander, par une commande (440) du dispositif de préparation de boisson, à une commande de température (11) du dispositif de préparation de boisson de refroidir un réservoir de fermentation (112) recevant un mélange incluant des ingrédients d'une boisson ;
détecter (S210) une température du réservoir de fermentation (112) en utilisant un capteur de température (16) ;
introduire (S230) un additif reçu dans un dispositif d'alimentation en ingrédients (3) du dispositif de préparation de boisson dans le réservoir de fermentation (112) ;
lorsque la température détectée est inférieure ou égale à une température de référence (S250), mettre fin (S260) au refroidissement du réservoir de fermentation (112) ; et
fournir (S270) de l'air au réservoir de fermentation (112) en entraînant une pompe à air (82) du dispositif de préparation de boisson,
dans lequel l'introduction (S230) de l'additif dans le réservoir de fermentation (112) est réalisée avant la fourniture (S270) de l'air au réservoir de fermentation (112),
dans lequel l'introduction (S230) de l'additif dans le réservoir de fermentation (112) comporte de commander à une pompe d'alimentation en eau (52) incluse dans le dispositif de préparation de boisson de fournir de l'eau au dispositif d'alimentation en ingrédients (3),
dans lequel l'introduction (S230) de l'additif dans le réservoir de fermentation (112) est réalisée lorsque (S220) la température détectée par le capteur de température (16) est inférieure ou égale à une première température de référence, et
dans lequel la fin (S260) du refroidissement du réservoir de fermentation (112) est réalisée lorsque (S250) la température détectée est inférieure ou égale à une seconde température de référence qui est inférieure à la première température de référence.
